# EUROPEAN PATENT SPECIFICATION

(11) **EP 2 770 669 B1**
(45) Date of publication and mention of the grant of the patent: **25.10.2017**
(21) Application number: 12879220.7
(22) Date of filing: 20.06.2012
(51) Int. Cl.: H04L 12/24, H04L 12/707, H04L 12/703

(54) **METHOD AND NODE DEVICE FOR ESTABLISHING RECOVERY PATH**
VERFAHREN UND KNOTENVORRICHTUNG ZUM AUFBAUEN EINES WIEDERHERSTELLUNGSPFADES
PROCÉDÉ ET DISPOSITIF DE NOEUD DESTINÉS À ÉTABLIR UN TRAJET DE RÉCUPÉRATION

(43) Date of publication of application: 27.08.2014
(73) Proprietor: Huawei Technologies Co., Ltd., Longgang District Shenzhen, Guangdong 518129 (CN)
(72) Inventor: SUI, Zhicheng, Shenzhen Guangdong 518129 (CN)
(74) Representative: Goddar, Heinz J.
(86) International application number: PCT/CN2012/077196
(87) International publication number: WO 2013/189039

(56) References cited:
- WO-A1-2011/079967
- CN-A- 102 104 495
- CN-A- 102 355 608
- US-A1- 2006 268 682
- US-A1- 2012 014 246
- AYAN BANERJEE ET AL: "Generalized Multiprotocol Label Switching: An Overview of Signaling Enhancements and Recovery Techniques", IEEE COMMUNICATIONS MAGAZINE, IEEE SERVICE CENTER, PISCATAWAY, US, vol. 39, no. 7, 1 July 2001 (2001-07-01), pages 144-151, XP011091771, ISSN: 0163-6804
- BERGER L ET AL: "Generalized Multi-Protocol Label Switching (GMPLS) Signaling Functional Description; rfc3471.txt", 20030101, 1 January 2003 (2003-01-01), XP015009254, ISSN: 0000-0003
- AWDUCHE MOVAZ NETWORKS D ET AL: "RSVP-TE: Extensions to RSVP for LSP Tunnels; rfc3209.txt", 20011201, 1 December 2001 (2001-12-01), XP015008988, ISSN: 0000-0003
- BERGER L ET AL: "Generalized Multi-Protocol Label Switching (GMPLS) Signaling; rfc3473.txt", 20030101, 1 January 2003 (2003-01-01), XP015009256, ISSN: 0000-0003
- LI (AT&T) C KALMANEK(AT&T) J YATES (AT&T) F LIAW (ZAFFIRE) V SHARMA (MATANOIA) G: "RSVP-TE Extensions For Shared-Mesh Restoration in Transport Networks; draft-li-shared-mesh-restoration-01.txt", 20011101, no. 1, 1 November 2001 (2001-11-01), XP015031744, ISSN: 0000-0004
- SEETHARAMAN OHIO STATE UNIVERSITY A DURRESI OHIO STATE UNIVERSITY R JAGANNATHAN OHIO STATE UNIVERSITY R JAIN NAYNA NETWORKS N CHAN: "IP over Optical Networks: A Summary of Issues; draft-osu-ipo-mpls-issues-02.txt", 1 April 2001 (2001-04-01), 20010401, XP015033554, ISSN: 0000-0004 * Section 1-3.1. *

## Description

### TECHNICAL FIELD

The present invention relates to network communications technologies, and in particular, to a method, a system, and a node device for establishing a restoration path.

### BACKGROUND

An automatically switched optical network (Automatically Switched Optical Network, ASON) can dynamically establish a path, and has a strong fault resistance capability. After a working path of a service encounters a fault, the service can be restored by using a restoration path, so as to ensure reliability of services with different survivability requirements.

In an existing automatically switched optical network technology, a restoration path can be dynamically established, and generally, the restoration path is established in two manners: A route is preset but no bandwidth resource is reserved, and this manner cannot ensure a bandwidth resource of the restoration path, the restoration path may preempt a resource of another service, and after a working path encounters a fault, a service cannot be restored in time and effectively, thereby reducing network reliability; a route is preset and a new bandwidth resource is reserved, and in this manner, requirements for a bandwidth resource increase, and a networking cost increases.

ARYAN BANERJEE ET AL: "Generalized Multiprotocol Label Switching: An Overview of Signaling Enhancements and Recovery Techniques" IEEE CQMMUNICATIONS MAGAZINE, IEEE SERVICE CENTER, PISCATAWAY, US, vol. 39, no. 7, 1 July 2001, pages 144-151 discloses that alternate routes may be precomputed by the head-end of the connection and cached for future use. A restored path may reuse nodes in the original path and/or include additional intermediate nodes. Resources at the downstream nodes are reused (shared) wherever possible, and resources at intermediate nodes that are no longer needed are freed. The paths are precomputed and resources preallocated.
BERGER L ET AL: "Generalized Multi-Protocol Label Switching (GMPLS) Signaling Functional Description; rfc3471.txt" 20030101, 1 January 2003 discloses extensions to Multi-Protocol Label Switching (MPLS) signaling required to support Generalized MPLS. Generalized MPLS extends the MPLS control plane to encompass time-division (e.g., Synchronous Optical Network and Synchronous Digital Hierarchy, SONET/SDH), wavelength (optical lambdas) and spatial switching (e.g., incoming port or fiber to outgoing port or fiber). **SUMMARY**

The present invention provides methods for establishing a restoration path of claims 1, 4 and 7, and node devices of claims 8 and 10, so as to solve the problems in the prior art that a service cannot be restored in time and effectively, and requirements for a bandwidth resource increase. The dependent claims define preferred embodiments of the invention.

The following technical solutions are adopted in the embodiments of the present invention:

One aspect of the present invention provides a method for establishing a restoration path, including:
determining, by a first node according to route information of a restoration path of a service and route information of a working path of the service, whether a first downstream neighboring node is the same as a second downstream neighboring node, and obtaining a first determination result, where the first downstream neighboring node is a downstream neighboring node of the first node on the restoration path, and the second downstream neighboring node is a downstream neighboring node of the first node on the working path;
allocating, by the first node, a first label and a first interface according to a condition, where the condition includes the first determination result, the first label is a forwarding label from the first node to the first downstream neighboring node, and the first interface is an outbound interface from the first node to the first downstream neighboring node, wherein the allocating, by the first node, a first label and a first interface according to a condition specifically comprises: if the first determination result is that the first downstream neighboring node is the
same as the second downstream neighboring node, the first label is the same as a forwarding label from the first node to the second downstream neighboring node, and the first interface is the same as an outbound interface from the first node to the second downstream neighboring node;
sending, by the first node, an establishment request message to the first downstream neighboring node, where the establishment request message includes at least the first label, the first interface, the route information of the restoration path, an identifier of the working path, and a shared resource indication information, wherein the shared resource indication information is used to determine that the restoration path shares a bandwidth resource with the working path by the first downstream neighboring node;
receiving, by the first node, an establishment response message of the restoration path, where the establishment response message includes at least a fourth label, a fourth interface, and the route information of the restoration path, the fourth label is a forwarding label from the first downstream neighboring node to the first node, and the fourth interface is an outbound interface from the first downstream neighboring node to the first node; and
establishing, by the first node, a cross-connection of the restoration path according to the first label, the first interface, the fourth label, and the fourth interface.

Another aspect of the present invention provides a method for establishing a restoration path, including:
receiving, by a second node, an establishment request message of a restoration path of a service, where the establishment request message includes at least a second label, a second interface, route information of the restoration path, an identifier of a working path of the service, and a shared resource indication information, wherein the shared resource indication information is used to determine that the restoration path shares a bandwidth resource with the working path by the second node, the second label is a forwarding label from a first upstream neighboring node to the second node, the second interface is an outbound interface from the first upstream neighboring node to the second node, and the first upstream neighboring node is an upstream neighboring node of the second node on the restoration path;
determining, by the second node according to the identifier of the working path and the route information of the restoration path, whether the first upstream neighboring node is the same as a second upstream neighboring node, and obtaining a third determination result, where the second upstream neighboring node is an upstream neighboring node of the second node on the working path;
allocating, by the second node, a third label and a third interface according to a condition, where the condition includes the third determination result, the third label is a forwarding label from the second node to the first upstream neighboring node, and the third interface is an outbound interface from the second node to the first upstream neighboring node, wherein the allocating, by the second node, a third label and a third interface according to a condition specifically comprises: if the third determination result is that the first upstream neighboring node is the same as the second upstream neighboring node, the third label is the same as a forwarding label from the second node to the second upstream neighboring node, and the third interface is the same as an outbound interface from the second node to the second upstream neighboring node;
establishing, by the second node, a cross-connection of the restoration path according to the second label, the second interface, the third label, and the third interface; and
after the second node allocates the third label and the third interface, sending, by the second node, an establishment response message of the restoration path to the first upstream neighboring node, where the establishment response message includes at least the third label, the third interface, and the route information of the restoration path.

Still another aspect of the present invention provides a method for establishing a restoration path, including:
receiving, by a third node, a first establishment request message of a restoration path of a service, where the first establishment request message includes at least a fifth label, a fifth interface, route information of the restoration path, an identifier of a working path of the service, and a first shared resource indication information, wherein the first shared resource indication information is used to determine that the restoration path shares a bandwidth resource with the working path by the third node, the fifth label is a forwarding label from a fourth upstream neighboring node to the third node, the fifth interface is an outbound interface from the fourth upstream neighboring node to the third node, and the fourth upstream neighboring node is an upstream neighboring node of the third node on the restoration path;
determining, by the third node according to the identifier of the working path and the route information of the restoration path, whether a sixth downstream neighboring node is the same as a seventh downstream neighboring node, and obtaining a fifth determination result, where the sixth downstream neighboring node is a downstream neighboring node of the third node on the restoration path, and the seventh downstream neighboring node is a downstream neighboring node of the third node on the working path;
allocating, by the third node, a sixth label and a sixth interface according to a first condition, where the first condition includes the fifth determination result, the sixth label is a forwarding label from the third node to the sixth downstream neighboring node, and the sixth interface is an outbound interface from the third node to the sixth downstream neighboring node, wherein the allocating, by the third node, a sixth label and a sixth interface according to a first condition specifically comprises: if the fifth determination result is that the sixth downstream neighboring node is the same as the seventh downstream neighboring node, the sixth label is the same as a forwarding label from the third node to the seventh downstream neighboring node, and the sixth interface is the same as an outbound interface from the third node to the seventh downstream neighboring node;
sending, by the third node, a second establishment request message of the restoration path to the sixth downstream neighboring node, where the second establishment request message includes at least the sixth label, the sixth interface, the route information of the restoration path, the identifier of the working path, and a second shared resource indication information, wherein the second shared resource indication information is used to determine that the restoration path shares a bandwidth resource with the working path by the sixth downstream neighboring node;
receiving, by the third node, a first establishment response message of the restoration path, where the first establishment response message includes at least a seventh label, a seventh interface, and the route information of the restoration path, the seventh label is a forwarding label from the sixth downstream neighboring node to the third node, and the seventh interface is an outbound interface from the sixth downstream neighboring node to the third node;
determining, by the third node according to the identifier of the working path and the route information of the restoration path, whether the fourth upstream neighboring node is the same as a fifth upstream neighboring node, and obtaining a sixth determination result, where the fifth upstream neighboring node is an upstream neighboring node of the third node on the working path;
allocating, by the third node, an eighth label and an eighth interface according to a second condition, where the second condition includes the sixth determination result, the eighth label is a forwarding label from the third node to the fourth upstream neighboring node, and the eighth interface is an outbound interface from the third node to the fourth upstream neighboring node, wherein the allocating, by the third node, an eighth label and an eighth interface according to a second condition specifically comprises: if the sixth determination result is that the fourth upstream neighboring node is the same as the fifth upstream neighboring node, the eighth label is the same as a forwarding label from the third node to the fifth upstream neighboring node, and the eighth interface is the same as an outbound interface from the third node to the fifth upstream neighboring node;
establishing, by the third node, a cross-connection of the restoration path according to the fifth label, the fifth interface, the sixth label, the sixth interface, the seventh label, the seventh interface, the eighth label, and the eighth interface; and
after the third node allocates the eighth label and the eighth interface, sending, by the third node, a second establishment response message of the restoration path to the fourth upstream neighboring node, where the second establishment response message includes at least the eighth label, the eighth interface, and the route information of the restoration path.

Yet another aspect of the present invention provides a node device, including:
a first determining unit, configured to determine, according to route information of a restoration path of a service and route information of a working path of the service, whether a first downstream neighboring node is the same as a second downstream neighboring node, and obtain a first determination result, where the first downstream neighboring node is a downstream neighboring node of the node device on the restoration path, and the second downstream neighboring node is a downstream neighboring node of the node device on the working path;
a first allocating unit, configured to allocate a first label and a first interface according to a condition, where the condition includes the first determination result, the first label is a forwarding label from the node device to the first downstream neighboring node, and the first interface is an outbound interface from the node device to the first downstream neighboring node, wherein if the first determination result is that the first downstream neighboring node is the same as the second downstream neighboring node, the first label is the same as a forwarding label from the node device to the second downstream neighboring node, and the first interface is the same as an outbound interface from the node device to the second downstream neighboring node;
a first sending unit, configured to send an establishment request message to the first downstream neighboring node, where the establishment request message includes at least the first label, the first interface, the route information of the restoration path, an identifier of the working path, and a shared resource indication information, wherein the shared resource indication information is used to determine that the restoration path shares a bandwidth resource with the working path by the first downstream neighboring node;
a first receiving unit, configured to receive an establishment response message of the restoration path, where the establishment response message includes at least a fourth label, a fourth interface, and the route information of the restoration path, the fourth label is a forwarding label from the first downstream neighboring node to the node device, and the fourth interface is an outbound interface from the first downstream neighboring node to the node device; and a first cross establishing unit, configured to establish a cross-connection of the restoration path according to the first label, the first interface, the fourth label, and the fourth interface.

Yet another aspect of the present invention provides a node device, including:
a second receiving unit, configured to receive an establishment request message of a restoration path of a service, where the establishment request message includes at least a second label, a second interface, route information of the restoration path, an identifier of a working path of the service, and a shared resource indication information, wherein the shared resource indication information is used to determine that the restoration path shares a bandwidth resource with the working path by the node, the second label is a forwarding label from a first upstream neighboring node to the node device, the second interface is an outbound interface from the first upstream neighboring node to the node device, and the first upstream neighboring node is an upstream neighboring node of the node device on the restoration path;
a second determining unit, configured to determine, according to the identifier of the working path and the route information of the restoration path, whether the first upstream neighboring node is the same as a second upstream neighboring node, and obtain a third determination result, where the second upstream neighboring node is an upstream neighboring node of the node device on the working path;
a second allocating unit, configured to allocate a third label and a third interface according to a condition, where the condition includes the third determination result, the third label is a forwarding label from the node device to the first upstream neighboring node, and the third interface is an outbound interface from the node device to the first upstream neighboring node, wherein if the third determination result is that the first upstream neighboring node is the same as the second upstream neighboring node, the third label is the same as a forwarding label from the node device to the second upstream neighboring node, and the third interface is the same as an outbound interface from the node device to the second upstream neighboring node;
a second cross establishing unit, configured to establish a cross-connection of the restoration path according to the second label, the second interface, the third label, and the third interface; and
a second sending unit, configured to: after the third label and the third interface are allocated, send an establishment response message of the restoration path to the first upstream neighboring node, where the establishment response message includes at least the third label, the third interface, and the route information of the restoration path.

According to the method, and node device for establishing a restoration path provided in the embodiments of the present invention, a node on a restoration path allocates a label and an outbound interface according to whether the node has a same downstream neighboring node on the restoration path and on a working path. Therefore, automatic establishment of the restoration path is implemented, a bandwidth resource of the restoration path is ensured, and a service can be restored in time and effectively after the working path encounters a fault, thereby improving network reliability. In addition, by using the technical solutions provided in the embodiments of the present invention, a bandwidth resource of an existing working path can be reused, thereby improving network resource utilization and reducing a networking cost.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1a is a flowchart of a method for establishing a restoration path according to an embodiment of the present invention;
FIG. 1b is a flowchart of a method for establishing a restoration path according to another embodiment of the present invention;
FIG 1c is a flowchart of a method for establishing a restoration path according to still another embodiment of the present invention;
FIG. 2 is a schematic diagram of a network topology according to an embodiment of the present invention;
FIG. 3 is a structural block diagram of a node device according to an embodiment of the present invention;
FIG. 4 is a structural block diagram of another node device according to an embodiment of the present invention;
FIG. 5 is a structural block diagram of still another node device according to an embodiment of the present invention; and
FIG. 6 is a schematic diagram of a system for establishing a restoration path according to an embodiment of the present invention.

### DESCRIPTION OF EMBODIMENTS

Embodiments of the present invention provide a method, a system, and a node device for establishing a restoration path. For a better understanding of the technical solutions of the present invention, the following describes the embodiments of the present invention in detail with reference to the accompanying drawings.

It should be made clear that, the described embodiments are merely a part rather than all of the embodiments of the present invention. All other embodiments obtained by a person of ordinary skill in the art based on the embodiments of the present invention without creative efforts shall fall within the protection scope of the present invention.

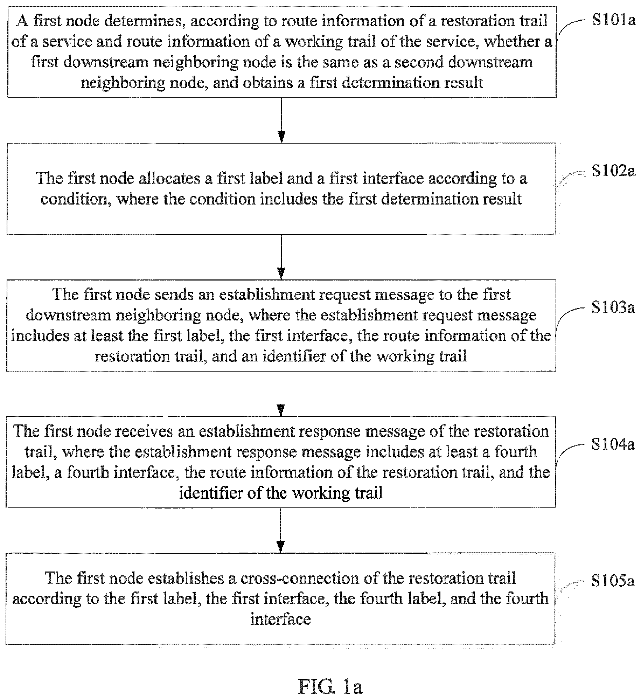

In an embodiment of the present invention, a process of a method for establishing a restoration path is shown in FIG. 1a. The method includes the following steps:
Step S101a: A first node determines, according to route information of a restoration path of a service and route information of a working path of the service, whether a first downstream neighboring node is the same as a second downstream neighboring node, and obtains a first determination result, where the first downstream neighboring node is a downstream neighboring node of the first node on the restoration path, and the second downstream neighboring node is a downstream neighboring node of the first node on the working path.
Step S102a: The first node allocates a first label and a first interface according to a condition, where the condition includes the first determination result, the first label is a forwarding label from the first node to the first downstream neighboring node, and the first interface is an outbound interface from the first node to the first downstream neighboring node.
Step S103a: The first node sends an establishment request message to the first downstream neighboring node, where the establishment request message includes at least the first label, the first interface, the route information of the restoration path, and an identifier of the working path.
Step S104a: The first node receives an establishment response message of the restoration path, where the establishment response message includes at least a fourth label, a fourth interface, and the route information of the restoration path, the fourth label is a forwarding label from the first downstream neighboring node to the first node, and the fourth interface is an outbound interface from the first downstream neighboring node to the first node.
Step S105a: The first node establishes a cross-connection of the restoration path according to the first label, the first interface, the fourth label, and the fourth interface.

Further, that the first node allocates a first label and a first interface according to a condition may specifically include:
if the first determination result is that the first downstream neighboring node is the same as the second downstream neighboring node, the first label is the same as a forwarding label from the first node to the second downstream neighboring node, and the first interface is the same as an outbound interface from the first node to the second downstream neighboring node.

Further, the establishment request message further includes shared resource indication information, where the shared resource indication information is used to determine that the restoration path shares a bandwidth resource with the working path by the first downstream neighboring node.

Further, the route information of the restoration path is obtained by the first node by searching according to fault information of the working path.

The restoration path may further share a bandwidth resource with the working path and a protection path. Based on the foregoing step S101a to step S105a, the method may further include:
the first node determines, according to the route information of the restoration path and route information of the protection path of the service, whether the first downstream neighboring node is the same as a third downstream neighboring node, and obtains a second determination result, where the third downstream neighboring node is a downstream neighboring node of the first node on the protection path; and
the condition may further include the second determination result, and the establishment request message may further include an identifier of the protection path.

Further, that the first node allocates a first label and a first interface according to a condition includes:
if the first determination result is that the first downstream neighboring node is the same as the second downstream neighboring node, the first label is the same as the forwarding label from the first node to the second downstream neighboring node, and the first
interface is the same as the outbound interface from the first node to the second downstream neighboring node; and if the second determination result is that the first downstream neighboring node is the same as the third downstream neighboring node, the first label is the same as a forwarding label from the first node to the third downstream neighboring node, and the first interface is the same as an outbound interface from the first node to the third downstream neighboring node.

Further, the establishment request message further includes shared resource indication information, where the shared resource indication information is used by the first downstream neighboring node to determine that the restoration path shares a bandwidth resource with the working path and the protection path.

Further, the route information of the restoration path is obtained by the first node by searching according to the fault information of the working path.

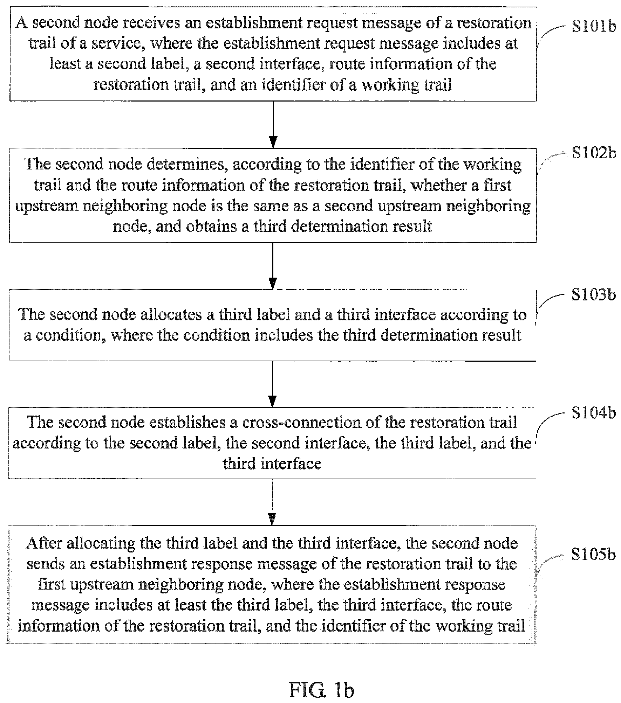

In another embodiment of the present invention, a process of a method for establishing a restoration path is shown in FIG. 1b. The method includes the following steps:
Step S101b: A second node receives an establishment request message of a restoration path of a service, where the establishment request message at least includes a second label, a second interface, route information of the restoration path, and an identifier of a working path of the service, the second label is a forwarding label from a first upstream neighboring node to the second node, the second interface is an outbound interface from the first upstream neighboring node to the second node, and the first upstream neighboring node is an upstream neighboring node of the second node on the restoration path.
Step S102b: The second node determines, according to the identifier of the working path and the route information of the restoration path, whether the first upstream neighboring node is the same as a second upstream neighboring node, and obtains a third determination result, where the second upstream neighboring node is an upstream neighboring node of the second node on the working path.
Step S103b: The second node allocates a third label and a third interface according to a condition, where the condition includes the third determination result, the third label is a forwarding label from the second node to the first upstream neighboring node, and the third interface is an outbound interface from the second node to the first upstream neighboring node.
Step S104b: The second node establishes a cross-connection of the restoration path according to the second label, the second interface, the third label, and the third interface.
Step S105b: After allocating the third label and the third interface, the second node sends an establishment response message of the restoration path to the first upstream neighboring node, where the establishment response message includes at least the third label, the third interface, and the route information of the restoration path.

Further, that the second node allocates a third label and a third interface according to a condition includes:
if the third determination result is that the first upstream neighboring node is the same as the second upstream neighboring node, the third label is the same as a forwarding label from the second node to the second upstream neighboring node, and the third interface is the same as an outbound interface from the second node to the second upstream neighboring node.

Further, the method further includes:
the establishment request message further includes shared resource indication information, where the shared resource indication information is used to determine that the restoration path shares a bandwidth resource with the working path by the second node; and before determining whether the first upstream neighboring node is the same as the second upstream neighboring node, the second node determines, according to the shared resource indication information, that the restoration path shares a bandwidth resource with the working path.

The restoration path may further share a bandwidth resource with the working path and a protection path. Based on the foregoing step S101b to step S104b, the method may further include:
the establishment request message may further include an identifier of the protection path of the service;
the second node further determines, according to the identifier of the protection path and the route information of the restoration path, whether the first upstream neighboring node is the same as a third upstream neighboring node, and obtains a fourth determination
   result, where the third upstream neighboring node is an upstream neighboring node of the second node on the protection path; and
the condition may further include the fourth determination result.

Further, that the second node allocates a third label and a third interface according to a condition may specifically include:
if the third determination result is that the first upstream neighboring node is the same as the second upstream neighboring node, the third label is the same as the forwarding label from the second node to the second upstream neighboring node, and the third interface is the same as the outbound interface from the second node to the second upstream neighboring node; and if the fourth determination result is that the first upstream neighboring node is the same as the third upstream neighboring node, the third label is the same as a forwarding label from the second node to the third upstream neighboring node, and the third interface is the same as an outbound interface from the second node to the third upstream neighboring node.

Further, the method may further include:
the establishment request message further includes shared resource indication information; and before determining whether the first upstream neighboring node is the same as the third upstream neighboring node, the second node determines, according to the shared resource indication information, that the restoration path shares with a bandwidth resource the working path and the protection path.

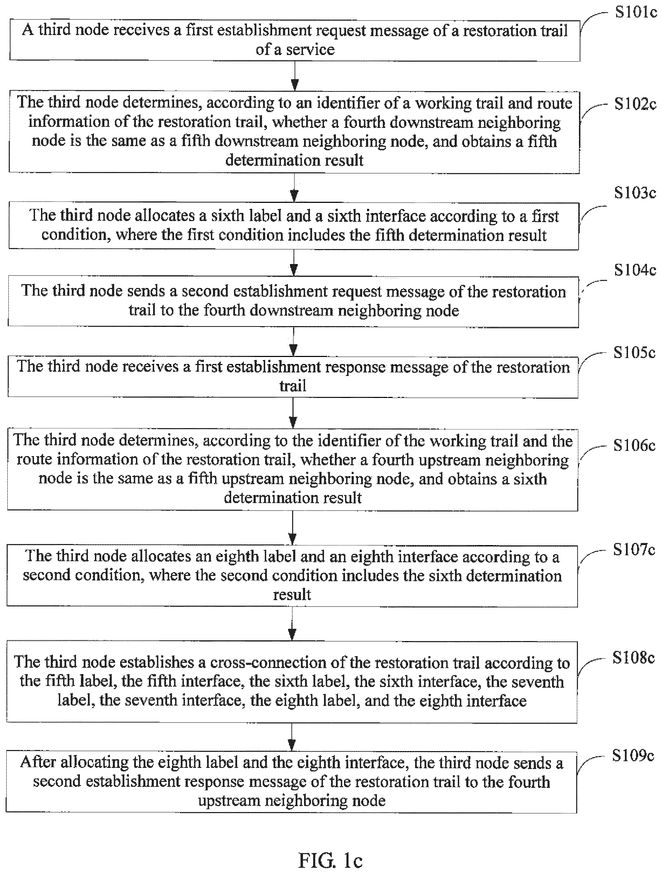

In still another embodiment of the present invention, a process of a method for establishing a restoration path is shown in FIG. 1c. The method includes the following steps:
Step S101c: A third node receives a first establishment request message of a restoration path of a service, where the first establishment request message includes at least a fifth label, a fifth interface, route information of the restoration path, and an identifier of a working path of the service, the fifth label is a forwarding label from a fourth upstream neighboring node to the third node, the fifth interface is an outbound interface from the fourth upstream neighboring node to the third node, and the fourth upstream neighboring node is an upstream neighboring node of the third node on the restoration path.
Step S102c: The third node determines, according to the identifier of the working path and the route information of the restoration path, whether a fourth downstream neighboring node is the same as a fifth downstream neighboring node, and obtains a fifth determination result, where the fourth downstream neighboring node is a downstream neighboring node of the third node on the restoration path, and the fifth downstream neighboring node is a downstream neighboring node of the third node on the working path.
Step S103c: The third node allocates a sixth label and a sixth interface according to a first condition, where the first condition includes the fifth determination result, the sixth label is a forwarding label from the third node to the fourth downstream neighboring node, and the sixth interface is an outbound interface from the third node to the fourth downstream neighboring node.
Step S104c: The third node sends a second establishment request message of the restoration path to the fourth downstream neighboring node, where the second establishment request message includes at least the sixth label, the sixth interface, the route information of the restoration path, and the identifier of the working path.
Step S105c: The third node receives a first establishment response message of the restoration path, where the first establishment response message includes at least a seventh label, a seventh interface, and the route information of the restoration path, the seventh label is a forwarding label from the fourth downstream neighboring node to the third node, and the seventh interface is an outbound interface from the fourth downstream neighboring node to the third node.
Step S106c: The third node determines, according to the identifier of the working path and the route information of the restoration path, whether the fourth upstream neighboring node is the same as a fifth upstream neighboring node, and obtains a sixth determination result, where the fifth upstream neighboring node is an upstream neighboring node of the third node on the working path.
Step S107c: The third node allocates an eighth label and an eighth interface according to a second condition, where the second condition includes the sixth determination result, the eighth label is a forwarding label from the third node to the fourth upstream neighboring node, and the eighth interface is an outbound interface from the third node to the fourth upstream neighboring node.
Step S108c: The third node establishes a cross-connection of the restoration path according to the fifth label, the fifth interface, the sixth label, the sixth interface, the seventh label, the seventh interface, the eighth label, and the eighth interface.
Step S109c: After allocating the eighth label and the eighth interface, the third node sends a second establishment response message of the restoration path to the fourth upstream neighboring node, where the second establishment response message includes at least the eighth label, the eighth interface, and the route information of the restoration path.

Further, that the third node allocates a sixth label and a sixth interface according to a first condition may specifically include: if the fifth determination result is that the fourth downstream neighboring node is the same as the fifth downstream neighboring node, the sixth label is the same as a forwarding label from the third node to the fifth downstream neighboring node, and the sixth interface is the same as an outbound interface from the third node to the fifth downstream neighboring node.

That the third node allocates an eighth label and an eighth interface according to a second condition includes: if the sixth determination result is that the fourth upstream neighboring node is the same as the fifth upstream neighboring node, the eighth label is the same as a forwarding label from the third node to the fifth upstream neighboring node, and the eighth interface is the same as an outbound interface from the third node to the fifth upstream neighboring node.

Further, the method further includes:
the first establishment request message further includes a first shared resource indication information, where the first shared resource indication information is used to determine that the restoration path shares a bandwidth resource with the working path by the third node, the second establishment request message further includes a second shared resource indication information, where the second shared resource indication information is used to determine that the restoration path shares a bandwidth resource with the working path by the fourth downstream neighboring node; and before determining whether the fourth downstream neighboring node is the same as the fifth downstream neighboring node, the third node determines, according to the shared resource indication information, that the restoration path shares a bandwidth resource with the working path.

The restoration path may further share a bandwidth resource with the working path and a protection path. Based on the foregoing step S101c to step S108c, the method may
further include:
the first establishment request message may further include an identifier of the protection path of the service;
the third node further determines, according to the identifier of the protection path and the route information of the restoration path, whether the fourth downstream neighboring node is the same as a sixth downstream neighboring node, and obtains a seventh determination result, where the sixth downstream neighboring node is a downstream neighboring node of the third node on the protection path;
the first condition may further include the seventh determination result, and the second establishment request message further includes the identifier of the protection path;
the third node further determines, according to the identifier of the protection path and the route information of the restoration path, whether the fourth upstream neighboring node is the same as a sixth upstream neighboring node, and obtains an eighth determination result, where the sixth upstream neighboring node is an upstream neighboring node of the third node on the protection path; and
the second condition may further include the eighth determination result.

Further, that the third node allocates a sixth label and a sixth interface according to a first condition may specifically include: if the fifth determination result is that the fourth downstream neighboring node is the same as the fifth downstream neighboring node, the sixth label is the same as the forwarding label from the third node to the fifth downstream neighboring node, and the sixth interface is the same as the outbound interface from the third node to the fifth downstream neighboring node; and if the seventh determination result is that the fourth downstream neighboring node is the same as the sixth downstream neighboring node, the sixth label is the same as a forwarding label from the third node to the sixth downstream neighboring node, and the sixth interface is the same as an outbound interface from the third node to the sixth downstream neighboring node.

That the third node allocates an eighth label and an eighth interface according to a second condition specifically includes: if the sixth determination result is that the fourth upstream neighboring node is the same as the fifth upstream neighboring node, the eighth label is the same as the forwarding label from the third node to the fifth upstream neighboring node, and the eighth interface is the same as the outbound interface from the third node to the fifth upstream neighboring node; and if the eighth determination result is that the fourth upstream neighboring node is the same as the sixth upstream neighboring node, the eighth label is the same as a forwarding label from the third node to the sixth upstream neighboring node, and the eighth interface is the same as an outbound interface from the third node to the sixth upstream neighboring node.

Further, the method further includes:
the first establishment request message further includes shared resource indication information, the second establishment request message further includes the shared resource indication information, and before determining whether the fourth downstream neighboring node is the same as the sixth downstream neighboring node, the third node determines, according to the shared resource indication information, that the restoration path shares a bandwidth resource with the working path and the protection path.

The following describes, in detail, a method, a node device, and a system for establishing a restoration path that are provided in the embodiments of the present invention with reference to the accompanying drawings.

It should be made clear that, the described embodiments are merely a part rather than all of the embodiments of the present invention. All other embodiments obtained by a person of ordinary skill in the art based on the embodiments of the present invention without creative efforts shall fall within the protection scope of the present invention.

In the following embodiments, downstream is a direction from a source node to a sink node, upstream is a direction from a sink node to a source node, a next hop is a hop between a current node and a downstream neighboring node, and a previous hop is a hop between a current node and an upstream neighboring node.

### Embodiment 1

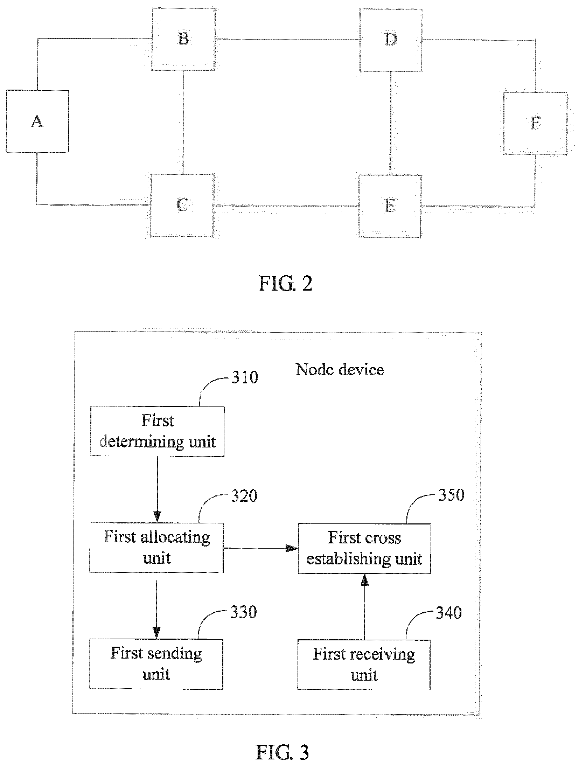

An embodiment of the present invention provides a method for establishing a restoration path. In a network shown in FIG. 2, the network includes nodes A, B, C, D, E, and F, and a solid line between nodes indicates an optical fiber link. A route of a working path of a service is A-B-D-F, and a corresponding bandwidth resource is allocated to the working path. A bandwidth resource on a link A-C and a bandwidth resource on a link E-F are occupied by another path, and may be occupied by a working path or a protection path of another service or occupied by a protection path of a service A-F. The node A has known a route of one or more restoration paths of the service. The node A is a source node of a signaling message, and the node F is a sink node of the signaling message. The working path has been established, and therefore the nodes have known route information of the working path. To establish one restoration path of the service, the method specifically includes the following steps:
Step S201: The node A determines, according to route information of a restoration path of the service and the route information of the working path of the service, whether the node A has a same downstream neighboring node on the restoration path and on the working path, and obtains a determination result.
   In this embodiment, the route of the working path is A-B-D-F, and a route of the restoration path is A-B-C-E-D-F, where a bandwidth resource of the working path is reused in the segments A-B and D-F.
   Specifically, the node A may search for a corresponding restoration path according to fault information of the working path, and obtain route information of the restoration path. For example, due to a fault on a link B-D, the working path of the service encounters a fault, and the node A may obtain fault information by means of signaling notifying, fault alarm transferring, and the like, where the fault information may include a fault location, a fault type of a node fault or a link fault, and the like. The node A finds a corresponding restoration path according to the fault information, and obtains the route information of the restoration path, that is, A-B-C-E-D-F. The corresponding restoration path can bypass the fault, thereby ensuring service restoration.
   The node A determines, according to the route information of the restoration path and the route information of the working path of the service, whether the node A has a same downstream neighboring node on the restoration path and on the working path:
   The downstream neighboring node of the node A on the restoration path is the node B; the downstream neighboring node of the node A on the working path is the node B; and therefore, the node A obtains a determination result that the node A has a same downstream neighboring node on the restoration path and on the working path.
Step S202: The node A allocates, according to the determination result, a forwarding label and an outbound interface that are from the node A to the node B on the restoration path.
   Specifically, the node A may allocate, according to the determination result, the forwarding label and the outbound interface that are from the node A to the node B on the restoration path. The determination result is: The node A has a same downstream neighboring node on the restoration path and on the working path; and therefore, the forwarding label from the node A to the node B on the restoration path is the same as a forwarding label from the node A to the node B on the working path, and the outbound interface from the node A to the node B on the restoration path is the same as an outbound interface from the node A to the node B on the working path.
Step S203: The node A sends an establishment request message to the downstream neighboring node B on the restoration path, where the establishment request message includes at least the forwarding label and the outbound interface that are from the node A to the node B on the restoration path, the route information of the restoration path, and an identifier of the working path.
   The establishment request message may further include information such as a traffic parameter.
Step S204: The node B receives the establishment request message of the restoration path that is sent by the node A, where the establishment request message includes at least the forwarding label and the outbound interface that are from the node A to the node B on the restoration path, the route information of the restoration path, and the identifier of the working path; determines, according to the identifier of the working path and the route information of the restoration path, whether the node B has a same downstream neighboring node on the restoration path and on the working path; and obtains a determination result.
   In this embodiment, the route of the working path is A-B-D-F, and the route of the restoration path is A-B-C-E-D-F, where a bandwidth resource of the working path is reused in the segments A-B and D-F.
   The node B obtains, according to the identifier of the working path, the route information of the working path, that is, A-B-D-F; and determines, according to the route information of the restoration path and the route information of the working path that are included in the establishment request message, whether the node B has a same downstream neighboring node on the restoration path and on the working path:
   The downstream neighboring node of the node B on the restoration path is the node D; the downstream neighboring node of the node B on the working path is the node C; and therefore, the node B obtains a determination result that the downstream neighboring node of the node B on the restoration path is different from the downstream neighboring node of the node B on the working path.
Step S205: The node B allocates, according to the determination result, a forwarding label and an outbound interface that are from the node B to the node C on the restoration path.
   Specifically, the node B may allocate, according to the determination result, the forwarding label and the outbound interface that are from the node B to the node C on the restoration path. The determination result is: The downstream neighboring node of the node B on the restoration path is different from the downstream neighboring node of the node B on the working path; and therefore, the node B randomly allocates a forwarding label and an outbound interface that are from the node B to the node C on the restoration path.
Step S206: The node B sends an establishment request message of the restoration path to the downstream neighboring node C on the restoration path, where the establishment request message includes at least the forwarding label and the outbound interface that are from the node B to the node C on the restoration path, the route information of the restoration path, and the identifier of the working path.
   The establishment request message may further include information such as a traffic parameter.
Step S207: The node C receives the establishment request message of the restoration path that is sent by the node B, where the establishment request message includes at least the forwarding label and the outbound interface that are from the node B to the node C on the restoration path, the route information of the restoration path, and the identifier of the working path; determines, according to the identifier of the working path and the route information of the restoration path, whether the node C has a same downstream neighboring node on the restoration path and on the working path; and obtains a determination result.
   In this embodiment, the route of the working path is A-B-D-F, and the route of the restoration path is A-B-C-E-D-F, where the bandwidth resource of the working path is reused in the segments A-B and D-F.
   The node C is not a node on the working path, and cannot obtain the route information of the working path according to the identifier of the working path; a downstream neighboring node of the node C on the restoration path is the node E; and therefore, the node C obtains a determination result that the downstream neighboring node of the node C on the restoration path is different from the downstream neighboring node of the node C on the working path.
Step S208: The node C allocates, according to the determination result, a forwarding label and an outbound interface that are from the node C to the node E on the restoration path.
   Specifically, the node C may allocate, according to the determination result, the forwarding label and the outbound interface that are from the node C to the node E on the restoration path. The determination result is: The downstream neighboring node of the node C on the restoration path is different from the downstream neighboring node of the node C on the working path; and therefore, the node C randomly allocates a forwarding label and an outbound interface that are from the node C to the node E on the restoration path.
Step S209: The node C sends an establishment request message of the restoration path to the downstream neighboring node E on the restoration path, where the establishment request message includes at least the forwarding label and the outbound interface that are from the node C to the node E on the restoration path, the route information of the restoration path, and the identifier of the working path.
   The establishment request message may further include information such as a traffic parameter.
Step S210: The node E receives the establishment request message of the restoration path that is sent by the node C, and performs a processing step similar to that performed by the node C.
Step S211: The node D receives an establishment request message of the restoration path that is sent by the node E, where the establishment request message includes at least a forwarding label and an outbound interface that are from the node E to the node D on the restoration path, the route information of the restoration path, and the identifier of the working path; determines, according to the identifier of the working path and the route information of the restoration path, whether the node D has a same downstream neighboring node on the restoration path and on the working path; and obtains a determination result.
   In this embodiment, the route of the working path is A-B-D-F, and the route of the restoration path is A-B-C-E-D-F, where the bandwidth resource of the working path is reused in the segments A-B and D-F.
   The node D obtains, according to the identifier of the working path, the route information of the working path, that is, A-B-D-F; and determines, according to the route information of the restoration path and the route information of the working path that are included in the establishment request message, whether the node D has a same downstream neighboring node on the restoration path and on the working path:
   The downstream neighboring node of the node D on the restoration path is the node F; the downstream neighboring node of the node D on the working path is the node F; and therefore, the node D obtains a determination result that the node D has a same downstream neighboring node on the restoration path and on the working path.
Step S212: The node D allocates, according to the determination result, a forwarding label and an outbound interface that are from the node D to the node F on the restoration path.
   Specifically, the node E may allocate, according to the determination result, the forwarding label and the outbound interface that are from the node D to the node F on the restoration path. The determination result is: The node D has a same downstream neighboring node on the restoration path and on the working path; and therefore, the forwarding label from the node D to the node F on the restoration path is the same as a forwarding label from the node D to the node F on the working path, and the outbound interface from the node D to the node F on the restoration path is the same as an outbound interface from the node D to the node F on the working path.
Step S213: The node D sends an establishment request message of the restoration path to the downstream neighboring node F on the restoration path, where the establishment request message includes at least the forwarding label and the outbound interface that are from the node D to the node F on the restoration path, the route information of the restoration path, and the identifier of the working path.
   The establishment request message may further include information such as a traffic parameter.
Step S214: The node F receives the establishment request message of the restoration path that is sent by the node D, where the establishment request message includes at least the forwarding label and the outbound interface that are from the node D to the node F on the restoration path, the route information of the restoration path, and the identifier of the working path; determines, according to the identifier of the working path and the route information of the restoration path, whether the node F has a same upstream neighboring node on the restoration path and on the working path; and obtains a determination result.
   In this embodiment, the route of the working path is A-B-D-F, and the route of the restoration path is A-B-C-E-D-F, where the bandwidth resource of the working path is reused in the segments A-B and D-F.
   The node F obtains, according to the identifier of the working path, the route information of the working path, that is, A-B-D-F; and determines, according to the route information of the restoration path and the route information of the working path that are included in the establishment request message, whether the node F has a same upstream neighboring node on the restoration path and on the working path:
   The upstream neighboring node of the node F on the restoration path is the node D; the upstream neighboring node of the node F on the working path is the node D; and therefore, the node F obtains a determination result that the node F has a same upstream neighboring node on the restoration path and on the working path.
Step S215: The node F allocates, according to the determination result, a forwarding label and an outbound interface that are from the node F to the node D on the restoration path.
   Specifically, the node F may allocate, according to the determination result, the forwarding label and the outbound interface that are from the node F to the node D on the restoration path. The determination result is: The node F has a same upstream neighboring node on the restoration path and on the working path; and therefore, the forwarding label from the node F to the node D on the restoration path is the same as a forwarding label from the node F to the node D on the working path, and the outbound interface from the node F to the node D on the restoration path is the same as an outbound interface from the node F to the node D on the working path.
Step S216: The node F establishes a cross-connection of the restoration path according to the forwarding label from the node D to the node F, the outbound interface from the node D to the node F, the forwarding label from the node F to the node D, and the outbound interface from the node F to the node D, which are on the restoration path.
   The node F may obtain an inbound interface from the node D to the node F according to the outbound interface from the node D to the node F, and establish a bidirectional cross-connection of the restoration path in combination with the inbound/outbound interface of the service on the node F, the outbound interface from the node F to the node D, the forwarding label from the node D to the node F, and the forwarding label from the node F to the node D.
Step S217: After allocating the forwarding label and the outbound interface that are from the node F to the node D on the restoration path, the node F sends an establishment response message of the restoration path to the upstream neighboring node D on the restoration path, where the establishment response message includes at least the forwarding label and the outbound interface that are from the node F to the node D on the restoration path, and the route information of the restoration path.
Step S218: The node D receives the establishment response message of the restoration path that is sent by the node F, where the establishment response message includes at least the forwarding label and the outbound interface that are from the node F to the node D on the restoration path, and the route information of the restoration path; determines, according to the identifier of the working path and the route information of the restoration path, whether the node D has a same upstream neighboring node on the restoration path and on the working path; and obtains a determination result.
   In this embodiment, the route of the working path is A-B-D-F, and the route of the restoration path is A-B-C-E-D-F, where the bandwidth resource of the working path is reused in the segments A-B and D-F.
   The node D obtains, according to the identifier of the working path, the route information of the working path, that is, A-B-D-F; and determines, according to the route information of the restoration path and the route information of the working path that are included in the establishment request message, whether the node D has a same upstream neighboring node on the restoration path and on the working path:
   The upstream neighboring node of the node D on the restoration path is the node E; the upstream neighboring node of the node D on the working path is the node B; and therefore, the node D obtains a determination result that the upstream neighboring node of the node D on the restoration path is different from the upstream neighboring node of the node D on the working path.
Step S219: The node D allocates, according to the determination result, a forwarding label and an outbound interface that are from the node D to the node E on the restoration path.
   Specifically, the node D may allocate, according to the determination result, the forwarding label and the outbound interface that are from the node D to the node E on the restoration path. The determination result is: The upstream neighboring node of the node D on the restoration path is different from the upstream neighboring node of the node D on the working path; and therefore, the node D randomly allocates a forwarding label and an outbound interface that are from the node D to the node E on the restoration path.
Step S220: The node D establishes a cross-connection of the restoration path according to the forwarding label from the node E to the node D, the outbound interface from the node E to the node D, the forwarding label from the node D to the node E, the outbound interface from the node D to the node E, the forwarding label from the node F to the node D, the outbound interface from the node F to the node D, the forwarding label from the node D to the node F, and the outbound interface from the node D to the node F, which are on the restoration path.
   The node D may obtain an inbound interface from the node E to the node D according to the outbound interface from the node E to the node D, obtain an inbound interface from the node F to the node D according to the outbound interface from the node F to the node D, and establish a bidirectional cross-connection of the restoration path in combination with the outbound interface from the node D to the node E, the outbound interface from the node D to the node F, the forwarding label from the node D to the node E, the forwarding label from the node D to the node F, the forwarding label from the node E to the node D, and the forwarding label from the node F to the node D.
Step S221: After allocating the forwarding label and the outbound interface that are from the node D to the node E on the restoration path, the node D sends an establishment response message of the restoration path to the upstream neighboring node E on the restoration path, where the establishment response message includes at least the forwarding label and the outbound interface that are from the node D to the node E on the restoration path, and the route information of the restoration path.
Step S222: The node E receives the establishment response message of the restoration path that is sent by the node D, where the establishment response message includes at least the forwarding label and the outbound interface that are from the node D to the node E on the restoration path, and the route information of the restoration path; determines, according to the identifier of the working path and the route information of the restoration path, whether the node E has a same upstream neighboring node on the restoration path and on the working path; and obtains a determination result.
   In this embodiment, the route of the working path is A-B-D-F, and the route of the restoration path is A-B-C-E-D-F, where the bandwidth resource of the working path is reused in the segments A-B and D-F.
   The node E is not a node on the working path, and cannot obtain the route information of the working path according to the identifier of the working path; the upstream neighboring node of the node E on the restoration path is the node C; and therefore, the node E obtains a determination result that the upstream neighboring node of the node E on the restoration path is different from the upstream neighboring node of the node E on the working path.
Step S223: The node E allocates, according to the determination result, a forwarding label and an outbound interface that are from the node E to the node C on the restoration path.
   Specifically, the node E may allocate, according to the determination result, the forwarding label and the outbound interface that are from the node E to the node C on the restoration path. The determination result is: The upstream neighboring node of the node E on the restoration path is different from the upstream neighboring node of the node E on the working path; and therefore, the node E randomly allocates a forwarding label and an outbound interface that are from the node E to the node C on the restoration path.
Step S224: The node E establishes a cross-connection of the restoration path according to the forwarding label from the node C to the node E, the outbound interface from the node C to the node E, the forwarding label from the node E to the node C, the outbound interface from the node E to the node C, the forwarding label from the node E to the node D, the outbound interface from the node E to the node D, the forwarding label from the node D to the node E, and the outbound interface from the node D to the node E, which are on the restoration path.
   The node E may obtain an inbound interface from the node C to the node E according to the outbound interface from the node C to the node E, obtain an inbound interface from the node D to the node E according to the outbound interface from the node D to the node E, and establish a bidirectional cross-connection of the restoration path in combination with the outbound interface from the node E to the node C, the outbound interface from the node E to the node D, the forwarding label from the node C to the node E, the forwarding label from the node E to the node C, the forwarding label from the node D to the node E, and the forwarding label from the node E to the node D.
Step S225: After allocating the forwarding label and the outbound interface that are from the node E to the node C on the restoration path, the node E sends an establishment response message of the restoration path to the upstream neighboring node C on the restoration path, where the establishment response message includes at least the forwarding label and the outbound interface that are from the node E to the node C on the restoration path, and the route information of the restoration path.
Step S226: The node C receives the establishment response message of the restoration path that is sent by the node E, and performs a processing step similar to that performed by the node E.
Step S227: The node B receives an establishment response message of the restoration path that is sent by the node C, where the establishment response message includes at least a forwarding label and an outbound interface that are from the node C to the node B on the restoration path, and the route information of the restoration path; determines, according to the identifier of the working path and the route information of the restoration path, whether the node B has a same upstream neighboring node on the restoration path and on the working path; and obtains a determination result.
   In this embodiment, the route of the working path is A-B-D-F, and the route of the restoration path is A-B-C-E-D-F, where the bandwidth resource of the working path is reused in the segments A-B and D-F.
   The node B obtains, according to the identifier of the working path, the route information of the working path, that is, A-B-D-F; and determines, according to the route information of the restoration path and the route information of the working path that are included in the establishment response message, whether the node B has a same upstream neighboring node on the restoration path and on the working path:
   The upstream neighboring node of the node B on the restoration path is the node A; the upstream neighboring node of the node B on the working path is the node A; and therefore, the node B obtains a determination result that the node B has a same upstream neighboring node on the restoration path and on the working path.
Step S228: The node B allocates, according to the determination result, a forwarding label and an outbound interface that are from the node B to the node A on the restoration path.
   Specifically, the node B may allocate, according to the determination result, the forwarding label and the outbound interface that are from the node B to the node A on the restoration path. The determination result is: The node B has a same upstream neighboring node on the restoration path and on the working path; and therefore, the forwarding label from the node B to the node A on the restoration path is the same as a forwarding label from the node B to the node A on the working path, and the outbound interface from the node B to the node A on the restoration path is the same as an outbound interface from the node B to the node A on the working path.
Step S229: The node B establishes a cross-connection of the restoration path according to the forwarding label from the node A to the node B, the outbound interface from the node A to the node B, the forwarding label from the node B to the node C, the outbound interface from the node B to the node C, the forwarding label from the node C to the node B, the outbound interface from the node C to the node B, the forwarding label from the node B to the node A, and the outbound interface from the node B to the node A, which are on the restoration path.
   The node B may obtain an inbound interface from the node A to the node B according to the outbound interface from the node A to the node B, obtain an inbound interface from the node C to the node B according to the outbound interface from the node C to the node B, and establish a bidirectional cross-connection of the restoration path in combination with the outbound interface from the node B to the node C, the outbound interface from the node B to the node A, the forwarding label from the node A to the node B, the forwarding label from the node B to the node A, the forwarding label from the node C to the node B, and the forwarding label from the node B to the node C.
Step S230: After allocating the forwarding label and the outbound interface that are from the node B to the node A on the restoration path, the node B sends an establishment response message of the restoration path to the upstream neighboring node A on the restoration path, where the establishment response message includes at least the forwarding label and the outbound interface that are from the node B to the node A on the restoration path, and the route information of the restoration path.
Step S231: The node A receives the establishment response message of the restoration path that is sent by the node B, where the establishment response message includes at least the forwarding label and the outbound interface that are from the node B to the node A on the restoration path, and the route information of the restoration path.
Step S232: The node A establishes a cross-connection of the restoration path according to the forwarding label from the node A to the node B, the outbound interface from the node A to the node B, the forwarding label from the node B to the node A, and the outbound interface from the node B to the node A, which are on the restoration path.

The node A may obtain an inbound interface from the node B to the node A according to the outbound interface from the node B to the node A, and establish a bidirectional cross-connection of the restoration path in combination with the inbound/outbound interface of the service on the node A, the outbound interface from the node A to the node B, the forwarding label from the node A to the node B, and the forwarding label from the node B to the node A.

According to the method for establishing a restoration path provided in the embodiment of the present invention, a node on a restoration path allocates a label and an outbound interface according to whether the node has a same downstream neighboring node on the restoration path and on a working path. Therefore, automatic establishment of the restoration path is implemented, a bandwidth resource of the restoration path is ensured, and a service can be restored in time and effectively after the working path encounters a fault, thereby improving network reliability. In addition, by using the technical solutions provided in the embodiment of the present invention, a bandwidth resource of an existing working path can be reused, thereby improving network resource utilization and reducing a networking cost.

In the embodiment, based on the foregoing step S201 to step S232, an establishment request message of a restoration path further includes shared resource indication information.

The shared resource indication information is used by a node that receives the establishment request message of the restoration path to determine that the restoration path shares a bandwidth resource with a working path; and then determine, according to an identifier of the working path and route information of the restoration path, whether a downstream neighboring node on the restoration path is the same as a downstream neighboring node on the working path, or determine, according to an identifier of the working path and route information of the restoration path, whether an upstream neighboring node on the restoration path is the same as an upstream neighboring node on the working path.

A manner in which an establishment request message of a restoration path includes shared resource indication information may be applied to the following scenarios: If a restoration path to be established needs to share a bandwidth resource with a working path, an establishment request message of the restoration path includes the shared resource indication information; and if the established restoration path does not need to share a bandwidth resource with the working path, the establishment request message of the restoration path does not include the shared resource indication information. The node that receives the establishment request message of the restoration path performs corresponding processing according to whether the establishment request message carries the shared resource indication information.

According to the method for establishing a restoration path provided in the embodiment of the present invention, in addition to implementing automatic establishment of a restoration path, ensuring a bandwidth resource of the restoration path, reusing a bandwidth resource on an existing working path, and improving network resource utilization, two implementation manners that the restoration path and the working path share a bandwidth resource and the restoration path and the working path do not share a bandwidth resource can be further compatible.

In another embodiment, based on the foregoing step S201 to step S232, an establishment request message of a restoration path may further include an identifier of a protection path of a service.

If the service further has the protection path, the establishment request message of the restoration path not only may include an identifier of a working path, but also may further include the identifier of the protection path, so as to determine whether the restoration path overlaps with the working path and the protection path. If the restoration path overlaps with the working path or the protection path, a label allocated in the establishment request message of the restoration path is the same as a label previously allocated to the working path or the protection path, and an outbound interface allocated in the establishment request message of the restoration path is the same as an outbound interface previously allocated to the working path or the protection path, and the restoration path shares a resource with the working path and the protection path. The protection path has been established, and therefore the nodes have known route information of the protection path.

A node that receives the establishment request message determines, according to the identifier of the protection path and route information of the restoration path, whether a downstream neighboring node on the restoration path is the same as a downstream neighboring node on the protection path, and obtains a determination result. The node allocates a forwarding label and an outbound interface in combination with the result and a determination result about whether the downstream neighboring node on the restoration path is the same as a downstream neighboring node on the working path:
if the downstream neighboring node on the restoration path is the same as the downstream neighboring node on the working path, a forwarding label from the node to the downstream neighboring node on the restoration path is the same as a forwarding label from the node to the downstream neighboring node on the working path, and an outbound interface from the node to the downstream neighboring node on the restoration path is the same as an outbound interface from the node to the downstream neighboring node on the working path; and
if the downstream neighboring node on the restoration path is the same as the downstream neighboring node on the protection path, a forwarding label from the node to the downstream neighboring node on the restoration path is the same as a forwarding label from the node to the downstream neighboring node on the protection path, and an outbound interface from the node to the downstream neighboring node on the restoration path is the same as an outbound interface from the node to the downstream neighboring node on the protection path.

The node A, as a source node of the restoration path, can directly determine, according to the route information of the protection path and the route information of the restoration path, whether the downstream neighboring node on the restoration path is the same as the downstream neighboring node on the protection path.

In this case, if the establishment request message of the restoration path includes the shared resource indication information, the shared resource indication information indicates that the restoration path can share a bandwidth resource with the working path and the protection path.

According to the method for establishing a restoration path provided in the embodiment of the present invention, a node on a restoration path allocates a label and an outbound interface according to whether the node has a same downstream neighboring node on the restoration path and on a working path. Therefore, automatic establishment of the restoration path is implemented, a bandwidth resource of the restoration path is ensured, and a service can be restored in time and effectively after the working path encounters a fault, thereby improving network reliability In addition, by using the technical solutions provided in the embodiment of the present invention, a bandwidth resource of an existing working path and protection path can be reused, thereby further improving network resource utilization and reducing a networking cost.

A route of a restoration path may include only a source node and a sink node, and not include an intermediate node; or may include a source node, a sink node, and one or more intermediate nodes. The foregoing embodiment describes a case in which a route of a restoration path includes a source node, a sink node, and a plurality of intermediate nodes.

According to the method for establishing a restoration path provided in the embodiment of the present invention, automatic establishment of a restoration path can be implemented; a bandwidth resource of an existing working path can be reused, or a bandwidth resource of a working path and a protection path can be reused; a bandwidth resource of the restoration path can be ensured; and a service can be recovered in time and effectively, thereby improving network reliability, and in addition, improving network resource utilization, and reducing a networking cost.

### Embodiment 2

An embodiment of the present invention provides a node device. As shown in FIG. 3, the node device includes:
a first determining unit 310, configured to determine, according to route information of a restoration path of a service and route information of a working path of the service, whether a first downstream neighboring node is the same as a second downstream neighboring node, and obtain a first determination result, where the first downstream neighboring node is a downstream neighboring node of the node device on the restoration path, and the second downstream neighboring node is a downstream neighboring node of the node device on the working path;
a first allocating unit 320, configured to allocate a first label and a first interface according to a condition, where the condition includes the first determination result, the first label is a forwarding label from the node device to the first downstream neighboring node, and the first interface is an outbound interface from the node device to the first downstream neighboring node;
a first sending unit 330, configured to send an establishment request message to the first downstream neighboring node, where the establishment request message includes at least the first label, the first interface, the route information of the restoration path, and an identifier of the working path;
a first receiving unit 340, configured to receive an establishment response message of the restoration path, where the establishment response message includes at least a fourth label, a fourth interface, and the route information of the restoration path, the fourth label is a forwarding label from the first downstream neighboring node to the node device, and the fourth interface is an outbound interface from the first downstream neighboring node to the node device; and
a first cross establishing unit 350, configured to establish a cross-connection of the restoration path according to the first label, the first interface, the fourth label, and the fourth interface.

Further, the first allocating unit 320 may specifically include:
if the first determination result is that the first downstream neighboring node is the same as the second downstream neighboring node, the first label is the same as a forwarding label from the node device to the second downstream neighboring node, and the first interface is the same as an outbound interface from the node device to the second downstream neighboring node.

Further, the establishment request message further includes shared resource indication information, where the shared resource indication information is used to determine that the restoration path shares a bandwidth resource with the working path by the first downstream neighboring node.

Further, the node device may further include:
a first searching unit 360, configured to obtain the route information of the restoration path by searching according to fault information of the working path.

### Embodiment 3

An embodiment of the present invention provides a node device. As shown in FIG. 3, the node device includes:
a first determining unit 310, configured to determine, according to route information of a restoration path of a service and route information of a working path of the service, whether a first downstream neighboring node is the same as a second downstream neighboring node, and obtain a first determination result; and may be further configured to determine, according to the route information of the restoration path and route information of a protection path of the service, whether the first downstream neighboring node is the same as a third downstream neighboring node, and obtain a second determination result, where the first downstream neighboring node is a downstream neighboring node of the node device on the restoration path, the second downstream neighboring node is a downstream neighboring node of the node device on the working path, and the third downstream neighboring node is a downstream neighboring node of the node device on the protection path;
a first allocating unit 320, configured to allocate a first label and a first interface according to a condition, where the condition includes the first determination result and the second determination result, the first label is a forwarding label from the node device to the first downstream neighboring node, and the first interface is an outbound interface from the node device to the first downstream neighboring node;
a first sending unit 330, configured to send an establishment request message to the first downstream neighboring node, where the establishment request message includes at least the first label, the first interface, the route information of the restoration path, an identifier of the working path, and an identifier of the protection path;
a first receiving unit 340, configured to receive an establishment response message of the restoration path, where the establishment response message includes at least a fourth label, a fourth interface, and the route information of the restoration path, the fourth label is a forwarding label from the first downstream neighboring node to the node device, and the fourth interface is an outbound interface from the first downstream neighboring node to the node device; and
a first cross establishing unit 350, configured to establish a cross-connection of the restoration path according to the first label, the first interface, the fourth label, and the fourth interface.

Further, the first allocating unit 320 specifically includes:
if the first determination result is that the first downstream neighboring node is the same as the second downstream neighboring node, the first label is the same as a forwarding label from the node device to the second downstream neighboring node, and the first interface is the same as an outbound interface from the node device to the second downstream neighboring node; and if the second determination result is that the first downstream neighboring node is the same as the third downstream neighboring node, the first label is the same as a forwarding label from the node device to the third downstream neighboring node, and the first interface is the same as an outbound interface from the node device to the third downstream neighboring node.

Further, the establishment request message further includes shared resource indication information, where the shared resource indication information is used by the first downstream neighboring node to determine that the restoration path shares a bandwidth resource with the working path and the protection path.

Further, the node device may further include:
a first searching unit 360, configured to obtain the route information of the restoration path by searching according to fault information of the working path.

### Embodiment 4

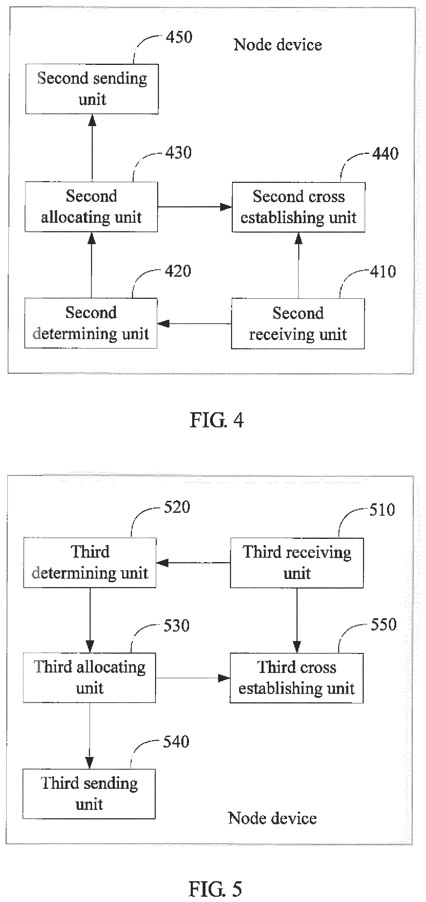

An embodiment of the present invention provides a node device. As shown in FIG 4, the node device includes:
a second receiving unit 410, configured to receive an establishment request message of a restoration path of a service, where the establishment request message includes at least a second label, a second interface, route information of the restoration path, and an identifier of a working path of the service, the second label is a forwarding label from a first upstream neighboring node to the node device, the second interface is an outbound interface from the first upstream neighboring node to the node device, and the first upstream neighboring node is an upstream neighboring node of the node device on the restoration path;
a second determining unit 420, configured to determine, according to the identifier of the working path and the route information of the restoration path, whether the first upstream neighboring node is the same as a second upstream neighboring node, and obtain a third determination result, where the second upstream neighboring node is an upstream neighboring node of the node device on the working path;
a second allocating unit 430, configured to allocate a third label and a third interface according to a condition, where the condition includes the third determination result, the third label is a forwarding label from the node device to the first upstream neighboring node, and the third interface is an outbound interface from the node device to the first upstream neighboring node;
a second cross establishing unit 440, configured to establish a cross-connection of the restoration path according to the second label, the second interface, the third label, and the third interface; and
a second sending unit 450, configured to: after the second allocating unit 430 allocates the third label and the third interface, send an establishment response message of the restoration path to the first upstream neighboring node, where the establishment response message includes at least the third label, the third interface, and the route information of the restoration path.

Further, the second allocating unit 430 may specifically include:
if the third determination result is that the first upstream neighboring node is the same as the second upstream neighboring node, the third label is the same as a forwarding label from the node device to the second upstream neighboring node, and the third interface is the same as an outbound interface from the node device to the second upstream neighboring node.

Further, the node device further includes:
the establishment request message further includes shared resource indication information, where the shared resource indication information is used to determine that the restoration path shares a bandwidth resource with the working path by the node; and the second determining unit 420 is further configured to: before determining whether the first upstream neighboring node is the same as the second upstream neighboring node, determine, according to the shared resource indication information, that the restoration path shares a bandwidth resource with the working path.

### Embodiment 5

An embodiment of the present invention provides a node device. As shown in FIG. 4, the node device includes:
a second receiving unit 410, configured to receive an establishment request message of a restoration path of a service, where the establishment request message includes at least a second label, a second interface, route information of the restoration path, an identifier of a working path of the service, and an identifier of a protection path, the second label is a forwarding label from a first upstream neighboring node to the node device, the second interface is an outbound interface from the first upstream neighboring node to the node device, and the first upstream neighboring node is an upstream neighboring node of the node device on the restoration path;
a second allocating unit 420, configured to determine, according to the identifier of the working path and the route information of the restoration path, whether the first upstream neighboring node is the same as a second upstream neighboring node, and obtain a third determination result; and may be further configured to determine, according to the identifier of the protection path and the route information of the restoration path, whether the first upstream neighboring node is the same as a third upstream neighboring node, and obtain a fourth determination result, where the second upstream neighboring node is an upstream neighboring node of the node device on the working path, and the third upstream neighboring node is an upstream neighboring node of the node device on the protection path;
a second allocating unit 430, configured to allocate a third label and a third interface according to a condition, where the condition includes the third determination result and the fourth determination result, the third label is a forwarding label from the node device to the first upstream neighboring node, and the third interface is an outbound interface from the node device to the first upstream neighboring node;
a second cross establishing unit 440, configured to establish a cross-connection of the restoration path according to the second label, the second interface, the third label, and the third interface; and
a second sending unit 450, configured to: after the second allocating unit 430 allocates the third label and the third interface, send an establishment response message of the restoration path to the first upstream neighboring node, where the establishment response message includes at least the third label, the third interface, and the route information of the restoration path.

Further, the second allocating unit 430 may specifically include:
if the third determination result is that the first upstream neighboring node is the same as the second upstream neighboring node, the third label is the same as a forwarding label from the node device to the second upstream neighboring node, and the third interface is the same as the outbound interface from the node device to the second upstream neighboring node; and if the fourth determination result is that the first upstream neighboring node is the same as the third upstream neighboring node, the third label is the same as a forwarding label from the node device to the third upstream neighboring node, and the third interface is the same as an outbound interface from the node device to the third upstream neighboring node.

Further, the node device further includes:
the establishment request message further includes shared resource indication information; and the second determining unit 420 is further configured to: before determining whether the first upstream neighboring node is the same as the third upstream neighboring node, determine, according to the shared resource indication information, that the restoration path shares a bandwidth resource with the working path and the protection path.

### Embodiment 6

An embodiment of the present invention provides a node device. As shown in FIG. 5, the node device includes:
a third receiving unit 510, configured to receive a first establishment request message of a restoration path of a service, where the first establishment request message includes at least a fifth label, a fifth interface, route information of the restoration path, and an identifier of a working path of the service, the fifth label is a forwarding label from a fourth upstream neighboring node to the node device, the fifth interface is an outbound interface from the fourth upstream neighboring node to the node device, and the fourth upstream neighboring node is an upstream neighboring node of the node device on the restoration path; and configured to receive a first establishment response message of the restoration path, where the first establishment response message includes at least a seventh label, a seventh interface, and the route information of the restoration path, the seventh label is a forwarding label from a fourth downstream neighboring node to the node device, and the seventh interface is an outbound interface from the fourth downstream neighboring node to the node device;
a third determining unit 520, configured to determine, according to the identifier of the working path and the route information of the restoration path, whether the fourth downstream neighboring node is the same as a fifth downstream neighboring node, and obtain a fifth determination result, where the fourth downstream neighboring node is a downstream neighboring node of the node device on the restoration path, and the fifth downstream neighboring node is a downstream neighboring node of the node device on the working path; and configured to determine, according to the identifier of the working path and the route information of the restoration path, whether the fourth upstream neighboring node is the same as a fifth upstream neighboring node, and obtain a sixth determination result, where the fifth upstream neighboring node is an upstream neighboring node of the node device on the working path;
a third allocating unit 530, configured to allocate a sixth label and a sixth interface according to a first condition, where the first condition includes the fifth determination result, the sixth label is a forwarding label from the node device to the fourth downstream neighboring node, and the sixth interface is an outbound interface from the node device to the fourth downstream neighboring node; and configured to allocate an eighth label and an eighth interface according to a second condition, where the second condition includes the sixth determination result, the eighth label is a forwarding label from the node device to the fourth upstream neighboring node, and the eighth interface is an outbound interface from the node device to the fourth upstream neighboring node;
a third sending unit 540, configured to send a second establishment request message of the restoration path to the fourth downstream neighboring node, where the second establishment request message includes at least the sixth label, the sixth interface, the route information of the restoration path, and the identifier of the working path; and configured to: after the third allocating unit 530 allocates the eighth label and the eighth interface, send a second establishment response message of the restoration path to the fourth upstream neighboring node, where the second establishment response message includes at least the eighth label, the eighth interface, and the route information of the restoration path; and
a third cross establishing unit 550, configured to establish a cross-connection of the restoration path according to the fifth label, the fifth interface, the sixth label, the sixth interface, the seventh label, the seventh interface, the eighth label, and the eighth interface.

Further, the third allocating unit 530 may specifically include:
if the fifth determination result is that the fourth downstream neighboring node is the same as the fifth downstream neighboring node, the sixth label is the same as a forwarding label from the node device to the fifth downstream neighboring node, and the sixth interface is the same as an outbound interface from the node device to the fifth downstream neighboring node; and if the sixth determination result is that the fourth upstream neighboring node is the same as the fifth upstream neighboring node, the eighth label is the same as a forwarding label from the node device to the fifth upstream neighboring node, and the eighth interface is the same as an outbound interface from the node device to the fifth upstream neighboring node.

Further, the node device further includes:
the first establishment request message further includes shared resource indication information, and the second establishment request message further includes shared resource indication information; and
the third determining unit 520 may be further configured to: before determining whether the fourth downstream neighboring node is the same as the fifth downstream neighboring node, determine, according to the shared resource indication information, that the restoration path shares a bandwidth resource with the working path.

### Embodiment 7

An embodiment of the present invention provides a node device. As shown in FIG. 5, the node device includes:
a third receiving unit 510, configured to receive a first establishment request message of a restoration path of a service, where the first establishment request message includes at least a fifth label, a fifth interface, route information of the restoration path, an identifier of a working path of the service, and an identifier of a protection path of the service, the fifth label is a forwarding label from a fourth upstream neighboring node to the node device, the fifth interface is an outbound interface from the fourth upstream neighboring node to the node device, and the fourth upstream neighboring node is an upstream neighboring node of the node device on the restoration path; and configured to receive a first establishment response message of the restoration path, where the first establishment response message includes at least a seventh label, a seventh interface, and the route information of the restoration path, the seventh label is a forwarding label from a fourth downstream neighboring node to the node device, and the seventh interface is an outbound interface from the fourth downstream neighboring node to the node device;
a third determining unit 520, configured to determine, according to the identifier of the working path and the route information of the restoration path, whether the fourth downstream neighboring node is the same as a fifth downstream neighboring node, and obtain a fifth determination result, where the fourth downstream neighboring node is a downstream neighboring node of the node device on the restoration path, and the fifth downstream neighboring node is a downstream neighboring node of the node device on the working path; configured to determine, according to the identifier of the working path and the route information of the restoration path, whether the fourth upstream neighboring node is the same as a fifth upstream neighboring node, and obtain a sixth determination result, where the fifth upstream neighboring node is an upstream neighboring node of the node device on the working path; further configured to determine, according to the identifier of the protection path and the route information of the restoration path, whether the fourth downstream neighboring node is the same as a sixth downstream neighboring node, and obtain a seventh determination result, where the sixth downstream neighboring node is a downstream neighboring node of the node device on the protection path; and further configured to determine, according to the identifier of the protection path and the route information of the restoration path, whether the fourth upstream neighboring node is the same as a sixth upstream neighboring node, and obtain an eighth determination result, where the sixth upstream neighboring node is an upstream neighboring node of the node device on the protection path;
a third allocating unit 530, configured to allocate a sixth label and a sixth interface according to a first condition, where the first condition includes the fifth determination result and the seventh determination result, the sixth label is a forwarding label from the node device to the fourth downstream neighboring node, and the sixth interface is an outbound interface from the node device to the fourth downstream neighboring node; and configured to allocate an eighth label and an eighth interface according to a second condition, where the second condition includes the sixth determination result and the eighth determination result, the eighth label is a forwarding label from the node device to the fourth upstream neighboring node, and the eighth interface is an outbound interface from the node device to the fourth upstream neighboring node;
a third sending unit 540, configured to send a second establishment request message of the restoration path to the fourth downstream neighboring node, where the second establishment request message includes at least the sixth label, the sixth interface, the route information of the restoration path, the identifier of the working path, and the identifier of the protection path; and configured to: after the third allocating unit 530 allocates the eighth label and the eighth interface, send a second establishment response message of the restoration path to the fourth upstream neighboring node, where the second establishment response message includes at least the eighth label, the eighth interface, and the route information of the restoration path; and
a third cross establishing unit 550, configured to establish a cross-connection of the restoration path according to the fifth label, the fifth interface, the sixth label, the sixth interface, the seventh label, the seventh interface, the eighth label, and the eighth interface.

Further, the third allocating unit 530 may specifically include:
if the fifth determination result is that the fourth downstream neighboring node is the same as the fifth downstream neighboring node, the sixth label is the same as a forwarding label from the node device to the fifth downstream neighboring node, and the sixth interface is the same as an outbound interface from the node device to the fifth downstream neighboring node; and if the seventh determination result is that the fourth downstream neighboring node is the same as the sixth downstream neighboring node, the sixth label is the same as a forwarding label from the node device to the sixth downstream neighboring node, and the sixth interface is the same as an outbound interface from the node device to the sixth downstream neighboring node; and
if the sixth determination result is that the fourth upstream neighboring node is the same as the fifth upstream neighboring node, the eighth label is the same as a forwarding label from the node device to the fifth upstream neighboring node, and the eighth interface is the same as the outbound interface from the node device to the fifth upstream neighboring node; and if the eighth determination result is that the fourth upstream neighboring node is the same as the sixth upstream neighboring node, the eighth label is the same as a forwarding label from the node device to the sixth upstream neighboring node, and the eighth interface is the same as an outbound interface from the node device to the sixth upstream neighboring node.

Further, the node device further includes:
the first establishment request message may further include a first shared resource indication information, where the first shared resource indication information is used to determine that the restoration path shares a bandwidth resource with the working path by the node, and the second establishment request message may further include a second shared resource indication information, where the second shared resource indication information is used to determine that the restoration path shares a bandwidth resource with the working path by the fourth downstream neighboring node; and
the third determining unit 520 may be further configured to: before determining whether the fourth downstream neighboring node is the same as the sixth downstream neighboring node, determine, according to the shared resource indication information, that the restoration path shares a bandwidth resource with the working path and the protection path.

Content such as information exchange and an execution process between the units in the node device provided in the foregoing embodiments 2 to 7 is based on a same idea as the method embodiments of the present invention. Therefore, for detailed content, reference may be made to descriptions in the method embodiments of the present invention, and details are not described herein again.

According to the node device provided in the embodiments of the present invention, the node device allocates a label and an outbound interface according to whether the node device has a same downstream neighboring node on a restoration path and on a working path. Therefore, automatic establishment of the restoration path is implemented, a bandwidth resource of the restoration path is ensured, and a service can be restored in time and effectively after the working path encounters a fault, thereby improving network reliability. In addition, by using the technical solutions provided in the embodiments of the present invention, a bandwidth resource of an existing working path can be reused, thereby improving network resource utilization and reducing a networking cost.

### Embodiment 8

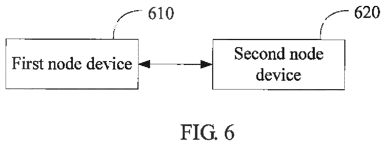

An embodiment of the present invention provides a system for establishing a restoration path. As shown in FIG. 6, the system includes at least a first node device 610 and a second node device 620, where the first node device 610 is connected to the second node device 620.

The first node device 610 includes: a first determining unit, a first allocating unit, a first sending unit, a first receiving unit, and a first cross establishing unit. For detailed content, reference may be made to the first determining unit 310, the first allocating unit 320,
the first sending unit 330, the first receiving unit 340, and the first cross establishing unit 350 in Embodiment 2, and details are not described herein again.

The second node device 620 includes: a second receiving unit, a second determining unit, a second allocating unit, a second cross establishing unit, and a second sending unit. For detailed content, reference may be made to the second receiving unit 410, the second determining unit 420, the second allocating unit 430, the second cross establishing unit 440, and the second sending unit 450 in Embodiment 4, and details are not described herein again.

A third node device 630 may further exist between the first node device 610 and the second node device 620 and is specifically:
the third node device 630 includes: a third receiving unit, a third determining unit, a third allocating unit, a third sending unit, and a third cross establishing unit. For detailed content, reference may be made to the third receiving unit 510, the third determining unit 520, the third allocating unit 530, the third sending unit 540, and the third cross establishing unit 550 in Embodiment 6, and details are not described herein again.

### Embodiment 9

An embodiment of the present invention provides a system for establishing a restoration path. As shown in FIG 6, the system includes at least a first node device 610 and a second node device 620, where the first node device 610 is connected to the second node device 620.

The first node device 610 includes: a first determining unit, a first allocating unit, a first sending unit, a first receiving unit, and a first cross establishing unit. For detailed content, reference may be made to the first determining unit 310, the first allocating unit 320, the first sending unit 330, the first receiving unit 340, and the first cross establishing unit 350 in Embodiment 3, and details are not described herein again.

The second node device 620 includes: a second receiving unit, a second determining unit, a second allocating unit, a second cross establishing unit, and a second sending unit. For detailed content, reference may be made to the second receiving unit 410, the second determining unit 420, the second allocating unit 430, the second cross establishing unit 440, and the second sending unit 450 in Embodiment 5, and details are not described herein again.

A third node device 630 may further exist between the first node device 610 and the second node device 620 and is specifically:
the third node device 630 includes: a third receiving unit, a third determining unit, a third allocating unit, a third sending unit, and a third cross establishing unit. For detailed content, reference may be made to the third receiving unit 510, the third determining unit 520, the third allocating unit 530, the third sending unit 540, and the third cross establishing unit 550 in Embodiment 7, and details are not described herein again.

In the system for establishing a restoration path provided in the foregoing Embodiment 8 and Embodiment 9, content such as a specific implementation process of a unit and information exchange between the units is based on a same invention idea as the method embodiments of the present invention. Therefore, reference may be made to the method embodiments, and details are not described herein again.

The foregoing embodiments may be implemented by extending the GMPLS (Generalized Multiprotocol Label Switching, generalized multiprotocol label switching) RSVP-TE (Resource Reservation Protocol with TE, Resource Reservation Protocol-Traffic Engineering) protocol, where a Path message is used as an establishment request message, and a Resv message is used as an establishment response message.

An identifier of a working path, an identifier of a protection path, and shared resource indication information may be borne by adding GMPLS RSVP-TE signaling or extending existing GMPLS RSVP-TE signaling.

The identifier of the working path may be carried by using an ASSOCIATION object in an extended Path message, and the shared resource indication information may be carried by using an LSP_REQUIRED_ATTRIBUTES object in the extended Path message. For example, one bit of the LSP_REQUIRED_ATTRIBUTES object is defined as the shared resource indication information; and if the bit is set to 1, it indicates that a restoration path shares a resource with the working path carried in the ASSOCIATION object.

The identifier of the working path and the identifier of the protection path may be carried by using the ASSOCIATION object in the extended Path message, and the shared resource indication information may be carried by using the LSP_REQUIRED_ATTRIBUTES object in the extended Path message. For example, two bits of the LSP_REQUIRED_ATTRIBUTES object are defined as the shared resource indication information, where one bit is used to indicate whether the restoration path shares a resource with the working path carried in the ASSOCIATION object, and the other bit is used to indicate whether the restoration path shares a resource with the protection path carried in the ASSOCIATION object.

According to the technical solutions provided in the embodiments of the present invention, automatic establishment of a restoration path can be implemented, a bandwidth resource of the restoration path can be ensured, and a service can be recovered in time and effectively after a working path encounters a fault, thereby improving network reliability. In addition, by using the technical solutions provided in the embodiments of the present invention, a bandwidth resource of an existing working path can be reused, thereby improving network resource utilization and reducing a networking cost.

A person of ordinary skill in the art may understand that all or a part of the steps of the method embodiments may be implemented by a computer program instructing relevant hardware. The program may be stored in a computer readable storage medium. When the program runs, the processes of the method embodiments may be included. The storage medium may be a magnetic disk, an optical disc, a read-only memory (Read-Only Memory, ROM), a random access memory (Random Access Memory, RAM), or the like.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for establishing a restoration path, comprising:
determining (S100a), by a first node according to route information of a restoration path of a service and route information of a working path of the service, whether a first downstream neighboring node is the same as a second downstream neighboring node, and obtaining a first determination result, wherein the first downstream neighboring node is a downstream neighboring node of the first node on the restoration path, and the second downstream neighboring node is a downstream neighboring node of the first node on the working path;
allocating (S102a), by the first node, a first label and a first interface according to a condition, wherein the condition comprises the first determination result, the first label is a forwarding label from the first node to the first downstream neighboring node, and the first interface is an outbound interface from the first node to the first downstream neighboring node, wherein the allocating, by the first node, a first label and a first interface according to a condition specifically comprises: if the first determination result is that the first downstream neighboring node is the same as the second downstream neighboring node, the first label is the same as a forwarding label from the first node to the second downstream neighboring node, and the first interface is the same as an outbound interface from the first node to the second downstream neighboring node; sending (S103a), by the first node, an establishment request message to the first downstream neighboring node, wherein the establishment request message comprises at least the first label, the first interface, the route information of the restoration path, an identifier of the working path, and a shared resource indication information, wherein the shared resource indication information is used to determine that the restoration path shares a bandwidth resource with the working path by the first downstream neighboring node;
receiving (S104a), by the first node, an establishment response message of the restoration path, wherein the establishment response message comprises at least a fourth label, a fourth interface, and the route information of the restoration path, the fourth label is a forwarding label from the first downstream neighboring node to the first node, and the fourth interface is an outbound interface from the first downstream neighboring node to the first node; and
establishing (S105a), by the first node, a cross-connection of the restoration path according to the first label, the first interface, the fourth label, and the fourth interface.

2. The method according to claim 1, wherein the method further comprises:
determining, by the first node according to the route information of the restoration path and route information of a protection path of the service, whether the first downstream neighboring node is the same as a third downstream neighboring node, and obtaining a second determination result, wherein the third downstream neighboring node is a downstream neighboring node of the first node on the protection path; and
the condition further comprises the second determination result, and the establishment request message further comprises an identifier of the protection path.

3. The method according to claim 2, wherein the allocating, by the first node, a first label and a first interface according to a condition specifically comprises:
if the second determination result is that the first downstream neighboring node is the same as the third downstream neighboring node, the first label is the same as a forwarding label from the first node to the third downstream neighboring node, and the first interface is the same as an outbound interface from the first node to the third downstream neighboring node.

4. A method for establishing a restoration path, comprising:
receiving (S101b), by a second node, an establishment request message of a restoration path of a service, wherein the establishment request message comprises at least a second label, a second interface, route information of the restoration path, an identifier of a working path of the service, and a shared resource indication information, wherein the shared resource indication information is used to determine that the restoration path shares a bandwidth resource with the working path by the second node, the second label is a forwarding label from a first upstream neighboring node to the second node, the second interface is an outbound interface from the first upstream neighboring node to the second node, and the first upstream neighboring node is an upstream neighboring node of the second node on the restoration path;
determining (S102b), by the second node according to the identifier of the working path and the route information of the restoration path, whether the first upstream neighboring node is the same as a second upstream neighboring node, and obtaining a third determination result, wherein the second upstream neighboring node is an upstream neighboring node of the second node on the working path;
allocating (S103b), by the second node, a third label and a third interface according to a condition, wherein the condition comprises the third determination result, the third label is a forwarding label from the second node to the first upstream neighboring node, and the third interface is an outbound interface from the second node to the first upstream neighboring node, wherein the allocating, by the second node, a third label and a third interface according to a condition specifically comprises: if the third determination result is that the first upstream neighboring node is the same as the second upstream neighboring node, the third label is the same as a forwarding label from the second node to the second upstream neighboring node, and the third interface is the same as an outbound interface from the second node to the second upstream neighboring node;
establishing (S104b), by the second node, a cross-connection of the restoration path according to the second label, the second interface, the third label, and the third interface; and
sending (S105b), by the second node, an establishment response message of the restoration path to the first upstream neighboring node after the third label and the third interface are allocated, wherein the establishment response message comprises at least the third label, the third interface, and the route information of the restoration path.

5. The method according to claim 4, wherein the method further comprises:
the establishment request message further comprises an identifier of a protection path of the service;
the second node further determines, according to the identifier of the protection path and the route information of the restoration path, whether the first upstream neighboring node is the same as a third upstream neighboring node, and obtains a fourth determination result, wherein the third upstream neighboring node is an upstream neighboring node of the second node and on the protection path; and
the condition further comprises the fourth determination result.

6. The method according to claim 5, wherein the allocating, by the second node, a third label and a third interface according to a condition specifically comprises:
if the fourth determination result is that the first upstream neighboring node is the same as the third upstream neighboring node, the third label is the same as a forwarding label from the second node to the third upstream neighboring node, and the third interface is the same as an outbound interface from the second node to the third upstream neighboring node.

7. A method for establishing a restoration path, comprising:
receiving (S101c), by a third node, a first establishment request message of a restoration path of a service, wherein the first establishment request message comprises at least a fifth label, a fifth interface, route information of the restoration path, an identifier of a working path of the service, and a first shared resource indication information, wherein the first shared resource indication information is used to determine that the restoration path shares a bandwidth resource with the working path by the third node, the fifth label is a forwarding label from a fourth upstream neighboring node to the third node, the fifth interface is an outbound interface from the fourth upstream neighboring node to the third node, and the fourth upstream neighboring node is an upstream neighboring node of the third node on the restoration path;
determining (S102c), by the third node according to the identifier of the working path and the route information of the restoration path, whether a sixth downstream neighboring node is the same as a seventh downstream neighboring node, and obtaining a fifth determination result, wherein the sixth downstream neighboring node is a downstream neighboring node of the third node on the restoration path, and the seventh downstream neighboring node is a downstream neighboring node of the third node on the working path;
allocating (S103c), by the third node, a sixth label and a sixth interface according to a first condition, wherein the first condition comprises the fifth determination result, the sixth label is a forwarding label from the third node to the sixth downstream neighboring node, and the sixth interface is an outbound interface from the third node to the sixth downstream neighboring node, wherein the allocating, by the third node, a sixth label and a sixth interface according to a first condition specifically comprises: if the fifth determination result is that the sixth downstream neighboring node is the same as the seventh downstream neighboring node, the sixth label is the same as a forwarding label from the third node to the seventh downstream neighboring node, and the sixth interface is the same as an outbound interface from the third node to the seventh downstream neighboring node;
sending (S104c), by the third node, a second establishment request message of the restoration path to the sixth downstream neighboring node, wherein the second establishment request message comprises at least the sixth label, the sixth interface, the route information of the restoration path, and the identifier of the working path, and a second shared resource indication information, wherein the second shared resource indication information is used to determine that the restoration path shares a bandwidth resource with the working path by the sixth downstream neighboring node;
receiving (S105c), by the third node, a first establishment response message of the restoration path, wherein the first establishment response message comprises at least a seventh label, a seventh interface, and the route information of the restoration path, the seventh label is a forwarding label from the sixth downstream neighboring node to the third node, and the seventh interface is an outbound interface from the sixth downstream neighboring node to the third node;
determining (S106c), by the third node according to the identifier of the working path and the route information of the restoration path, whether the fourth upstream neighboring node is the same as a fifth upstream neighboring node, and obtaining a sixth determination result, wherein the fifth upstream neighboring node is an upstream neighboring node of the third node on the working path;
allocating (S 107c), by the third node, an eighth label and an eighth interface according to a second condition, wherein the second condition comprises the sixth determination result, the eighth label is a forwarding label from the third node to the fourth upstream neighboring node, and the eighth interface is an outbound interface from the third node to the fourth upstream neighboring node, wherein the allocating, by the third node, an eighth label and an eighth interface according to a second condition specifically comprises: if the sixth determination result is that the fourth upstream neighboring node is the same as the fifth upstream neighboring node, the eighth label is the same as a forwarding label from the third node to the fifth upstream neighboring node, and the eighth interface is the same as an outbound interface from the third node to the fifth upstream neighboring node;
establishing (S108c), by the third node, a cross-connection of the restoration path according to the fifth label, the fifth interface, the sixth label, the sixth interface, the seventh label, the seventh interface, the eighth label, and the eighth interface; and sending (S109c), by the third node, a second establishment response message of the restoration path to the fourth upstream neighboring node after the eighth label and the eighth interface are allocated, wherein the second establishment response message comprises at least the eighth label, the eighth interface, and the route information of the restoration path.

8. A node device, comprising a first determining unit (310), a first allocating unit (320), a first sending unit (330), a first receiving unit (340), and a first cross establishing unit (350), wherein:
the first determining unit is configured to determine, according to route information of a restoration path of a service and route information of a working path of the service, whether a first downstream neighboring node is the same as a second downstream neighboring node, and obtain a first determination result, wherein the first downstream neighboring node is a downstream neighboring node of the node device on the restoration path, and the second downstream neighboring node is a downstream neighboring node of the node device on the working path;
the first allocating unit is configured to allocate a first label and a first interface according to a condition, wherein the condition comprises the first determination result, the first label is a forwarding label from the node device to the first downstream neighboring node, and the first interface is an outbound interface from the node device to the first downstream neighboring node, wherein if the first determination result is that the first downstream neighboring node is the same as the second downstream neighboring node, the first label is the same as a forwarding label from the node device to the second downstream neighboring node, and the first interface is the same as an outbound interface from the node device to the second downstream neighboring node;
the first sending unit is configured to send an establishment request message to the first downstream neighboring node, wherein the establishment request message comprises at least the first label, the first interface, the route information of the restoration path, an identifier of the working path, and a shared resource indication information, wherein the shared resource indication information is used to determine that the restoration path shares a bandwidth resource with the working path by the first downstream neighboring node;
the receiving unit is configured to receive an establishment response message of the restoration path, wherein the establishment response message comprises at least a fourth label, a fourth interface, and the route information of the restoration path, the fourth label is a forwarding label from the first downstream neighboring node to the node device, and the fourth interface is an outbound interface from the first downstream neighboring node to the node device; and
the first cross establishing unit is configured to establish a cross-connection of the restoration path according to the first label, the first interface, the fourth label, and the fourth interface.

9. The node device according to claim 8, wherein the node device further comprises:
the first determining unit is further configured to determine, according to the route information of the restoration path and route information of a protection path of the service, whether the first downstream neighboring node is the same as a third downstream neighboring node, and obtain a second determination result, wherein the third downstream neighboring node is a downstream neighboring node of the node device on the protection path; and
the condition further comprises the second determination result, and the establishment request message further comprises an identifier of the protection path.

10. A node device, comprising a second receiving unit (410), a second determining unit (420), a second allocating unit (430), a second cross establishing unit (440), and a second sending unit (450), wherein:
the second receiving unit is configured to receive an establishment request message of a restoration path of a service, wherein the establishment request message comprises at least a second label, a second interface, route information of the restoration path, an identifier of a working path of the service, and a shared resource indication information, wherein the shared resource indication information is used to determine that the restoration path shares a bandwidth resource with the working path by the node device, the second label is a forwarding label from a first upstream neighboring node to the node device, the second interface is an outbound interface from the first upstream neighboring node to the node device, and the first upstream neighboring node is an upstream neighboring node of the node device on the restoration path;
the second determining unit is configured to determine, according to the identifier of the working path and the route information of the restoration path, whether the first upstream neighboring node is the same as a second upstream neighboring node, and obtain a third determination result, wherein the second upstream neighboring node is an upstream neighboring node of the node device on the working path;
the second allocating unit is configured to allocate a third label and a third interface according to a condition, wherein the condition comprises the third determination result, the third label is a forwarding label from the node device to the first upstream neighboring node, and the third interface is an outbound interface from the node device to the first upstream neighboring node, wherein if the third determination result is that the first upstream neighboring node is the same as the second upstream neighboring node, the third label is the same as a forwarding label from the node device to the second upstream neighboring node, and the third interface is the same as an outbound interface from the node device to the second upstream neighboring node;
the second cross establishing unit is configured to establish a cross-connection of the restoration path according to the second label, the second interface, the third label, and the third interface; and
the second sending unit is configured to: after the second allocating unit allocates the third label and the third interface, send an establishment response message of the restoration path to the first upstream neighboring node, wherein the establishment response message comprises at least the third label, the third interface, and the route information of the restoration path.

## Patentansprüche

1. Verfahren zum Aufbauen eines Wiederherstellungspfades, umfassend:
Bestimmen (S100a) durch einen ersten Knoten gemäß Routeninformationen eines Wiederherstellungspfades eines Dienstes und Routeninformationen eines Arbeitspfades des Dienstes, ob ein erster nachgeschalteter Nachbarknoten derselbe wie ein zweiter nachgeschalteter Nachbarknoten ist, und Erhalten eines ersten Bestimmungsergebnisses, wobei der erste nachgeschaltete Nachbarknoten ein nachgeschalteter Nachbarknoten des ersten Knotens auf dem Wiederherstellungspfad ist, und der zweite nachgeschaltete Nachbarknoten ein nachgeschalteter Nachbarknoten des ersten Knotens auf dem Arbeitspfad ist;
Zuweisen (S102a) durch den ersten Knoten einer ersten Markierung und einer ersten Schnittstelle gemäß einer Bedingung, wobei die Bedingung das erste Bestimmungsergebnis umfasst, wobei die erste Markierung eine weiterleitende Markierung von dem ersten Knoten zu dem ersten nachgeschalteten Nachbarknoten ist und die erste Schnittstelle eine abgehende Schnittstelle von dem ersten Knoten zu dem ersten nachgeschalteten Nachbarknoten ist, wobei das Zuweisen durch den ersten Knoten einer ersten Markierung und einer ersten Schnittstelle gemäß einer Bedingung insbesondere Folgendes umfasst: wenn das erste Bestimmungsergebnis lautet, dass der erste nachgeschaltete Nachbarknoten derselbe wie der zweite nachgeschaltete Nachbarknoten ist, die erste Markierung dieselbe wie eine weiterleitende Markierung von dem ersten Knoten zu dem zweiten nachgeschalteten Nachbarknoten ist und die erste Schnittstelle dieselbe wie eine abgehende Schnittstelle von dem ersten Knoten zu dem zweiten nachgeschalteten Nachbarknoten ist;
Senden (S103a) durch den ersten Knoten einer Aufbauanforderungsnachricht zu dem ersten nachgeschalteten Nachbarknoten, wobei die Aufbauanforderungsnachricht mindestens die erste Markierung, die erste Schnittstelle, die Routeninformationen des Wiederherstellungspfades, eine Kennung des Arbeitspfades und eine geteilte Ressourcenangabeinformation umfasst, wobei die geteilte Ressourcenangabeinformation verwendet wird, um zu bestimmen, dass der Wiederherstellungspfad eine Bandbreitenressource mit dem Arbeitspfad durch den ersten nachgeschalteten Nachbarknoten teilt;
Empfangen (S104a) durch den ersten Knoten einer Aufbauantwortnachricht des Wiederherstellungspfades, wobei die Aufbauantwortnachricht mindestens eine vierte Markierung, eine vierte Schnittstelle und die Routeninformation des Wiederherstellungspfades umfasst, die vierte Markierung eine weiterleitende Markierung von dem ersten nachgeschalteten Nachbarknoten zu dem ersten Knoten ist, und die vierte Schnittstelle eine abgehende Schnittstelle von dem ersten nachgeschalteten Nachbarknoten zu dem ersten Knoten ist; und
Aufbauen (S105a) durch den ersten Knoten einer Querverbindung des Wiederherstellungspfades gemäß der ersten Markierung, der ersten Schnittstelle, der vierten Markierung und der vierten Schnittstelle.

2. Verfahren nach Anspruch 1, wobei das Verfahren ferner Folgendes umfasst:
Bestimmen durch den ersten Knoten gemäß den Routeninformationen des Wiederherstellungspfades und Routeninformationen eines Schutzpfades des Dienstes, ob der erste nachgeschaltete Nachbarknoten derselbe wie ein dritter nachgeschalteter Nachbarknoten ist, und Erhalten eines zweiten Bestimmungsergebnisses, wobei der dritte nachgeschaltete Nachbarknoten ein nachgeschalteter Nachbarknoten des ersten Knotens auf dem Schutzpfad ist; und wobei die Bedingung ferner das zweite Bestimmungsergebnis umfasst und die Aufbauanforderungsnachricht ferner eine Kennung des Schutzpfades umfasst.

3. Verfahren nach Anspruch 2, wobei das Zuweisen durch den ersten Knoten einer ersten Markierung und einer ersten Schnittstelle gemäß einer Bedingung insbesondere Folgendes umfasst:
wenn das zweite Bestimmungsergebnis lautet, dass der erste nachgeschaltete Nachbarknoten derselbe wie der dritte nachgeschaltete Nachbarknoten ist, die erste Markierung dieselbe wie eine weiterleitende Markierung von dem ersten Knoten zu dem dritten nachgeschalteten Nachbarknoten ist und die erste Schnittstelle dieselbe wie eine abgehende Schnittstelle von dem ersten Knoten zu dem dritten nachgeschalteten Nachbarknoten ist.

4. Verfahren zum Aufbauen eines Wiederherstellungspfades, umfassend:
Empfangen (S101b) durch einen zweiten Knoten einer Aufbauanforderungsnachricht eines Wiederherstellungspfades eines Dienstes, wobei die Aufbauanforderungsnachricht mindestens eine zweite Markierung, eine zweite Schnittstelle, Routeninformationen des Wiederherstellungspfades, eine Kennung eines Arbeitspfades des Dienstes und eine geteilte Ressourcenangabeinformation umfasst, wobei die geteilte Ressourcenangabeinformation verwendet wird, um zu bestimmen, dass der Wiederherstellungspfad eine Bandbreitenressource mit dem Arbeitspfad durch den zweiten Knoten teilt, wobei die zweite Markierung eine weiterleitende Markierung von einem ersten vorgeschalteten Nachbarknoten zu dem zweiten Knoten ist, die zweite Schnittstelle eine abgehende Schnittstelle von dem ersten vorgeschalteten Nachbarknoten zu dem zweiten Knoten ist und der erste vorgeschaltete Nachbarknoten ein vorgeschalteter Nachbarknoten des zweiten Knotens auf dem Wiederherstellungspfad ist;
Bestimmen (S102b) durch den zweiten Knoten gemäß der Kennung des Arbeitspfades und den Routeninformationen des Wiederherstellungspfades, ob der erste vorgeschaltete Nachbarknoten derselbe wie ein zweiter vorgeschalteter Nachbarknoten ist, und Erhalten eines dritten Bestimmungsergebnisses, wobei der zweite vorgeschaltete Nachbarknoten ein vorgeschalteter Nachbarknoten des zweiten Knotens auf dem Arbeitspfad ist;
Zuweisen (S103b) durch den zweiten Knoten einer dritten Markierung und einer dritten Schnittstelle gemäß einer Bedingung, wobei die Bedingung das dritte Bestimmungsergebnis umfasst, die dritte Markierung eine weiterleitende Markierung von dem zweiten Knoten zu dem ersten vorgeschalteten Nachbarknoten ist und die dritte Schnittstelle eine abgehende Schnittstelle von dem zweiten Knoten zu dem ersten vorgeschalteten Nachbarknoten ist, wobei das Zuweisen durch den zweiten Knoten einer dritten Markierung und einer dritten Schnittstelle gemäß einer Bedingung insbesondere Folgendes umfasst: wenn das dritte Bestimmungsergebnis lautet, dass der erste vorgeschaltete Nachbarknoten derselbe wie der zweite vorgeschaltete Nachbarknoten ist, die dritte Markierung dieselbe wie eine weiterleitende Markierung von dem zweiten Knoten zu dem zweiten vorgeschalteten Nachbarknoten ist und die dritte Schnittstelle dieselbe wie eine abgehende Schnittstelle von dem zweiten Knoten zu dem zweiten vorgeschalteten Nachbarknoten ist;
Aufbauen (S104b) durch den zweiten Knoten einer Querverbindung des Wiederherstellungspfades gemäß der zweiten Markierung, der zweiten Schnittstelle, der dritten Markierung und der dritten Schnittstelle; und
Senden (S105b) durch den zweiten Knoten einer Aufbauantwortnachricht des Wiederherstellungspfades zu dem ersten vorgeschalteten Nachbarknoten, nachdem die dritte Markierung und die dritte Schnittstelle zugewiesen sind, wobei die Aufbauantwortnachricht mindestens die dritte Markierung, die dritte Schnittstelle und die Routeninformationen des Wiederherstellungspfades umfasst.

5. Verfahren nach Anspruch 4, wobei das Verfahren ferner Folgendes umfasst:
die Aufbauanforderungsnachricht umfasst ferner eine Kennung eines Schutzpfades des Dienstes;
der zweite Knoten bestimmt ferner gemäß der Kennung des Schutzpfades und den Routeninformationen des Wiederherstellungspfades, ob der erste vorgeschaltete Nachbarknoten derselbe wie ein dritter vorgeschalteter Nachbarknoten ist und erhält ein viertes Bestimmungsergebnis, wobei der dritte vorgeschaltete Nachbarknoten ein vorgeschalteter Nachbarknoten des zweiten Knotens und auf dem Schutzpfad ist; und die Bedingung umfasst ferner das vierte Bestimmungsergebnis.

6. Verfahren nach Anspruch 5, wobei das Zuweisen durch den zweiten Knoten einer dritten Markierung und einer dritten Schnittstelle gemäß einer Bedingung insbesondere Folgendes umfasst:
wenn das vierte Bestimmungsergebnis lautet, dass der erste vorgeschaltete Nachbarknoten derselbe wie der dritte vorgeschaltete Nachbarknoten ist, die dritte Markierung dieselbe wie eine weiterleitende Markierung von dem zweiten Knoten zu dem dritten vorgeschalteten Nachbarknoten ist und die dritte Schnittstelle dieselbe wie eine abgehende Schnittstelle von dem zweiten Knoten zu dem dritten vorgeschalteten Nachbarknoten ist.

7. Verfahren zum Aufbauen eines Wiederherstellungspfades, umfassend:
Empfangen (S101c) durch einen dritten Knoten einer ersten Aufbauanforderungsnachricht eines Wiederherstellungspfades eines Dienstes, wobei die erste Aufbauanforderungsnachricht mindestens eine fünfte Markierung, eine fünfte Schnittstelle, Routeninformationen des Wiederherstellungspfades, eine Kennung eines Arbeitspfades des Dienstes und eine erste geteilte Ressourcenangabeinformation umfasst, wobei die erste geteilte Ressourcenangabeinformation verwendet wird, um zu bestimmen, dass der Wiederherstellungspfad eine Bandbreitenressource mit dem Arbeitspfad durch den dritten Knoten teilt, die fünfte Markierung eine weiterleitende Markierung von einem vierten vorgeschalteten Nachbarknoten zu dem dritten Knoten ist, die fünfte Schnittstelle eine abgehende Schnittstelle von dem vierten vorgeschalteten Nachbarknoten zu dem dritten Knoten ist und der vierte vorgeschaltete Nachbarknoten ein vorgeschalteter Nachbarknoten des dritten Knotens auf dem Wiederherstellungspfad ist;
Bestimmen (S102c) durch den dritten Knoten gemäß der Kennung des Arbeitspfades und den Routeninformationen des Wiederherstellungspfades, ob ein sechster nachgeschalteter Nachbarknoten derselbe wie ein siebter nachgeschalteter Nachbarknoten ist, und Erhalten eines fünften Bestimmungsergebnisses, wobei der sechste nachgeschaltete Nachbarknoten ein nachgeschalteter Nachbarknoten des dritten Knotens auf dem Wiederherstellungspfad ist und der siebte nachgeschaltete Nachbarknoten ein nachgeschalteter Nachbarknoten des dritten Knotens auf dem Arbeitspfad ist;
Zuweisen (S103c) durch den dritten Knoten einer sechsten Markierung und einer sechsten Schnittstelle gemäß einer ersten Bedingung, wobei die erste Bedingung das fünfte Bestimmungsergebnis umfasst, die sechste Markierung eine weiterleitende Markierung von dem dritten Knoten zu dem sechsten nachgeschalteten Nachbarknoten ist und die sechste Schnittstelle eine abgehende Schnittstelle von dem dritten Knoten zu dem sechsten nachgeschalteten Nachbarknoten ist, wobei das Zuweisen durch den dritten Knoten einer sechsten Markierung und einer sechsten Schnittstelle gemäß einer ersten Bedingung insbesondere Folgendes umfasst: wenn das fünfte Bestimmungsergebnis lautet, dass der sechste nachgeschaltete Nachbarknoten derselbe wie der siebte nachgeschaltete Nachbarknoten ist, die sechste Markierung dieselbe wie eine weiterleitende Markierung von dem dritten Knoten zu dem siebten nachgeschalteten Nachbarknoten ist und die sechste Schnittstelle dieselbe wie eine abgehende Schnittstelle von dem dritten Knoten zu den siebten nachgeschalteten Nachbarknoten ist;
Senden (S104c) durch den dritten Knoten einer zweiten Aufbauanforderungsnachricht des Wiederherstellungspfades zu dem sechsten nachgeschalteten Nachbarknoten, wobei die zweite Aufbauanforderungsnachricht mindestens die sechste Markierung, die sechste Schnittstelle, die Routeninformationen des Wiederherstellungspfades und die Kennung des Arbeitspfades und eine zweite geteilte Ressourcenangabeinformation umfasst, wobei die zweite geteilte Ressourcenangabeinformation verwendet wird, um zu bestimmen, dass der Wiederherstellungspfad eine Bandbreitenressource mit dem Arbeitspfad durch den sechsten nachgeschalteten Nachbarknoten teilt;
Empfangen (S105c) durch den dritten Knoten einer ersten Aufbauantwortnachricht des Wiederherstellungspfades, wobei die erste Aufbauantwortnachricht mindestens eine siebte Markierung, eine siebte Schnittstelle und die Routeninformationen des Wiederherstellungspfades umfasst, die siebte Markierung eine weiterleitende Markierung von dem sechsten nachgeschalteten Nachbarknoten zu dem dritten Knoten ist und die siebte Schnittstelle eine abgehende Schnittstelle von dem sechsten nachgeschalteten Nachbarknoten zu dem dritten Knoten ist;
Bestimmen (S106c) durch den dritten Knoten gemäß der Kennung des Arbeitspfades und den Routeninformationen des Wiederherstellungspfades, ob der vierte vorgeschaltete Nachbarknoten derselbe wie ein fünfter vorgeschalteter Nachbarknoten ist, und Erhalten eines sechsten Bestimmungsergebnisses, wobei der fünfte vorgeschaltete Nachbarknoten ein vorgeschalteter Nachbarknoten des dritten Knotens auf dem Arbeitspfad ist;
Zuweisen (S107c) durch den dritten Knoten einer achten Markierung und einer achten Schnittstelle gemäß einer zweiten Bedingung, wobei die zweite Bedingung das sechste Bestimmungsergebnis umfasst, die achte Markierung eine weiterleitende Markierung von dem dritten Knoten zu dem vierten vorgeschalteten Nachbarknoten ist und die achte Schnittstelle eine abgehende Schnittstelle von dem dritten Knoten zu dem vierten vorgeschalteten Nachbarknoten ist, wobei das Zuweisen durch den dritten Knoten einer achten Markierung und einer achten Schnittstelle gemäß einer zweiten Bedingung insbesondere Folgendes umfasst: wenn das sechste Bestimmungsergebnis lautet, dass der vierte vorgeschaltete Nachbarknoten derselbe wie der fünfte vorgeschaltete Nachbarknoten ist, die achte Markierung dieselbe wie eine weiterleitende Markierung von dem dritten Knoten zu dem fünften vorgeschalteten Nachbarknoten ist, und die achte Schnittstelle dieselbe wie eine abgehende Schnittstelle von dem dritten Knoten zu dem fünften vorgeschalteten Nachbarknoten ist;
Aufbauen (S108c) durch den dritten Knoten einer Querverbindung des Wiederherstellungspfades gemäß der fünften Markierung, der fünften Schnittstelle, der sechsten Markierung, der sechsten Schnittstelle, der siebten Markierung, der siebten Schnittstelle, der achten Markierung und der achten Schnittstelle; und
Senden (S109c) durch den dritten Knoten einer zweiten Aufbauantwortnachricht des Wiederherstellungspfades zu dem vierten vorgeschalteten Nachbarknoten, nachdem die achte Markierung und die achte Schnittstelle zugewiesen werden, wobei die zweite Aufbauantwortnachricht mindestens die achte Markierung, die achte Schnittstelle und die Routeninformationen des Wiederherstellungspfades umfasst.

8. Knotenvorrichtung, die eine erste Bestimmungseinheit (310), eine erste Zuweisungseinheit (320), eine erste Sendeeinheit (330), eine erste Empfangseinheit (340) und eine erste Queraufbaueinheit (350) umfasst, wobei:
die erste Bestimmungseinheit ausgebildet ist, um gemäß Routeninformationen eines Wiederherstellungspfades eines Dienstes und Routeninformationen eines Arbeitspfades des Dienstes zu bestimmen, ob ein erster nachgeschalteter Nachbarknoten derselbe wie ein zweiter nachgeschalteter Nachbarknoten ist, und ein erstes Bestimmungsergebnis zu erhalten, wobei der erste nachgeschaltete Nachbarknoten ein nachgeschalteter Nachbarknoten der Knotenvorrichtung auf dem Wiederherstellungspfad ist, und der zweite nachgeschaltete Nachbarknoten ein nachgeschalteter Nachbarknoten der Knotenvorrichtung auf dem Arbeitspfad ist;
die erste Zuweisungseinheit ausgebildet ist, um eine erste Markierung und eine erste Schnittstelle gemäß einer Bedingung zuzuweisen, wobei die Bedingung das erste Bestimmungsergebnis umfasst, die erste Markierung eine weiterleitende Markierung von der Knotenvorrichtung zu dem ersten nachgeschalteten Nachbarknoten ist, und die erste Schnittstelle eine abgehende Schnittstelle von der Knotenvorrichtung zu dem ersten nachgeschalteten Nachbarknoten ist, wobei, wenn das erste Bestimmungsergebnis lautet, dass der erste nachgeschaltete Nachbarknoten derselbe wie der zweite nachgeschaltete Nachbarknoten ist, die erste Markierung dieselbe wie eine weiterleitende Markierung von der Knotenvorrichtung zu dem zweiten nachgeschalteten Nachbarknoten ist und die erste Schnittstelle dieselbe wie eine abgehende Schnittstelle von der Knotenvorrichtung zu dem zweiten nachgeschalteten Nachbarknoten ist;
die erste Sendeeinheit ausgebildet ist, um eine Aufbauanforderungsnachricht zu dem ersten nachgeschalteten Nachbarknoten zu senden, wobei die Aufbauanforderungsnachricht mindestens die erste Markierung, die erste Schnittstelle, die Routeninformationen des Wiederherstellungspfades, eine Kennung des Arbeitspfades und eine geteilte Ressourcenangabeinformation umfasst, wobei die geteilte Ressourcenangabeinformation verwendet wird, um zu bestimmen, dass der Wiederherstellungspfad eine Bandbreitenressource mit dem Arbeitspfad durch den ersten nachgeschalteten Nachbarknoten teilt;
die Empfangseinheit ausgebildet ist, um eine Aufbauantwortnachricht des Wiederherstellungspfades zu empfangen, wobei die Aufbauantwortnachricht mindestens eine vierte Markierung, eine vierte Schnittstelle und die Routeninformationen des Wiederherstellungspfades umfasst, die vierte Markierung eine weiterleitende Markierung von dem ersten nachgeschalteten Nachbarknoten zu der Knotenvorrichtung ist, und die vierte Schnittstelle eine abgehende Schnittstelle von dem ersten nachgeschalteten Nachbarknoten zu der Knotenvorrichtung ist; und
die erste Queraufbaueinheit ausgebildet ist, um eine Querverbindung des Wiederherstellungspfades gemäß der ersten Markierung, der ersten Schnittstelle, der vierten Markierung und der vierten Schnittstelle aufzubauen.

9. Knotenvorrichtung nach Anspruch 8, wobei die Knotenvorrichtung ferner Folgendes umfasst: die erste Bestimmungseinheit ist ferner ausgebildet, um gemäß den Routeninformationen des Wiederherstellungspfades und Routeninformationen eines Schutzpfades des Dienstes zu bestimmen, ob der erste nachgeschaltete Nachbarknoten derselbe wie ein dritter nachgeschalteter Nachbarknoten ist, und ein zweites Bestimmungsergebnis zu erhalten, wobei der dritte nachgeschaltete Nachbarknoten ein nachgeschalteter Nachbarknoten der Knotenvorrichtung auf dem Schutzpfad ist; und
die Bedingung ferner das zweite Bestimmungsergebnis umfasst, und die Aufbauanforderungsnachricht ferner eine Kennung des Schutzpfades umfasst.

10. Knotenvorrichtung, die eine zweite Empfangseinheit (410), eine zweite Bestimmungseinheit (420), eine zweite Zuweisungseinheit (430), eine zweite Queraufbaueinheit (440) und eine zweite Sendeinheit (450) umfasst, wobei:
die zweite Empfangseinheit ausgebildet ist, um eine Aufbauanforderungsnachricht eines Wiederherstellungspfades eines Dienstes zu empfangen, wobei die Aufbauanforderungsnachricht mindestens eine zweite Markierung, eine zweite Schnittstelle, Routeninformationen des Wiederherstellungspfades, eine Kennung eines Arbeitspfades des Dienstes und eine geteilte Ressourcenangabeinformation umfasst, wobei die geteilte Ressourcenangabeinformation verwendet wird, um zu bestimmen, dass der Wiederherstellungspfad eine Bandbreitenressource mit dem Arbeitspfad durch die Knotenvorrichtung teilt, die zweite Markierung eine weiterleitende Markierung von einem ersten vorgeschalteten Nachbarknoten zu der Knotenvorrichtung ist, die zweite Schnittstelle eine abgehende Schnittstelle von dem ersten vorgeschalteten Nachbarknoten zu der Knotenvorrichtung ist und der erste vorgeschaltete Nachbarknoten ein vorgeschalteter Nachbarknoten der Knotenvorrichtung auf dem Wiederherstellungspfad ist;
die zweite Bestimmungseinheit ausgebildet ist, um gemäß der Kennung des Arbeitspfades und den Routeninformationen des Wiederherstellungspfades zu bestimmen, ob der erste vorgeschaltete Nachbarknoten derselbe wie ein zweiter vorgeschalteter Nachbarknoten ist, und ein drittes Bestimmungsergebnis zu erhalten, wobei der zweite vorgeschaltete Nachbarknoten ein vorgeschalteter Nachbarknoten der Knotenvorrichtung auf dem Arbeitspfad ist;
die zweite Zuweisungseinheit ausgebildet ist, um eine dritte Markierung und eine dritte Schnittstelle gemäß einer Bedingung zuzuweisen, wobei die Bedingung das dritte Bestimmungsergebnis umfasst, die dritte Markierung eine weiterleitende Markierung von der Knotenvorrichtung zu dem ersten vorgeschalteten Nachbarknoten ist und die dritte Schnittstelle eine abgehende Schnittstelle von der Knotenvorrichtung zu dem ersten vorgeschalteten Nachbarknoten ist, wobei, wenn das dritte Bestimmungsergebnis lautet, dass der erste vorgeschaltete Nachbarknoten derselbe wie der zweite vorgeschaltete Nachbarknoten ist, die dritte Markierung dieselbe wie eine weiterleitende Markierung von der Knotenvorrichtung zu dem zweiten vorgeschalteten Nachbarknoten ist und die dritte Schnittstelle dieselbe wie eine abgehende Schnittstelle von der Knotenvorrichtung zu dem zweiten vorgeschalteten Nachbarknoten ist;
die zweite Queraufbaueinheit ausgebildet ist, um eine Querverbindung des Wiederherstellungspfades gemäß der zweiten Markierung, der zweiten Schnittstelle, der dritten Markierung und der dritten Schnittstelle aufzubauen; und
die zweite Sendeeinheit ausgebildet ist, um: nachdem die zweite Zuweisungseinheit die dritte Markierung und die dritte Schnittstelle zuweist, eine Aufbauantwortnachricht des Wiederherstellungspfades zu dem ersten vorgeschalteten Nachbarknoten zu senden, wobei die Aufbauantwortnachricht mindestens die dritte Markierung, die dritte Schnittstelle und die Routeninformationen des Wiederherstellungspfades umfasst.

## Revendications

1. Procédé d'établissement d'un chemin de restauration, comprenant les étapes suivantes
détermination (S100a), par un premier noeud, en fonction d'informations de route relatives à un chemin de restauration d'un service et d'informations de route relatives à un chemin normal du service, si un premier noeud voisin aval est le même qu'un deuxième noeud voisin aval, et obtention d'un premier résultat de détermination, le premier noeud voisin aval étant un noeud voisin aval du premier noeud sur le chemin de restauration et le deuxième noeud voisin aval étant un noeud voisin aval du premier noeud sur le chemin normal ;
allocation (S102a), par le premier noeud, d'une première étiquette et d'une première interface en fonction d'une condition, la condition comprenant le premier résultat de détermination, la première étiquette étant une étiquette de réacheminement du premier noeud au premier noeud voisin aval et la première interface étant une interface sortante du premier noeud au premier noeud voisin aval, l'étape d'allocation, par le premier noeud, d'une première étiquette et d'une première interface en fonction d'une condition comprenant plus particulièrement : si le premier résultat de détermination est que le premier noeud voisin aval est le même que le deuxième noeud voisin aval, la première étiquette est la même qu'une étiquette de réacheminement du premier noeud au deuxième noeud voisin aval et la première interface est la même qu'une interface sortante du premier noeud au deuxième noeud voisin aval ;
transmission (S103a), par le premier noeud, d'un message de demande d'établissement au premier noeud voisin aval, le message de demande d'établissement comprenant au moins la première étiquette, la première interface, les informations de route relatives au chemin de restauration, un identifiant du chemin normal et une information d'indication de ressource partagée, l'information d'indication de ressource partagée servant à déterminer que le chemin de restauration partage une ressource de bande passante avec le chemin normal par le premier noeud voisin aval ;
réception (S104a), par le premier noeud, d'un message de réponse d'établissement relatif au chemin de restauration, le message de réponse d'établissement comprenant au moins une quatrième étiquette, une quatrième interface et les informations de route relatives au chemin de restauration, la quatrième étiquette étant une étiquette de réacheminement du premier noeud voisin aval au premier noeud et la quatrième interface étant une interface sortante du premier noeud voisin aval au premier noeud ; et
établissement (S105a), par le premier noeud, d'une connexion croisée du chemin de restauration en fonction de la première étiquette, de la première interface, de la quatrième étiquette et de la quatrième interface.

2. Procédé selon la revendication 1, lequel procédé comprend en outre l'étape suivante :
détermination, par le premier noeud, en fonction des informations de route relatives au chemin de restauration et d'informations de route relatives à un chemin de protection du service, si le premier noeud voisin aval est le même qu'un troisième noeud voisin aval, et obtention d'un deuxième résultat de détermination, le troisième noeud voisin aval étant un noeud voisin aval du premier noeud sur le chemin de protection ; et dans lequel
la condition comprend en outre le deuxième résultat de détermination, et le message de demande d'établissement comprend en outre un identifiant du chemin de protection.

3. Procédé selon la revendication 2, dans lequel l'étape d'allocation, par le premier noeud, d'une première étiquette et d'une première interface en fonction d'une condition comprend plus particulièrement :
si le deuxième résultat de détermination est que le premier noeud voisin aval est le même que le troisième noeud voisin aval, la première étiquette est la même qu'une étiquette de réacheminement du premier noeud au troisième noeud voisin aval et la première interface est la même qu'une interface sortante du premier noeud au troisième noeud voisin aval.

4. Procédé d'établissement d'un chemin de restauration, comprenant les étapes suivantes
réception (S101b), par un deuxième noeud, d'un message de demande d'établissement relatif à un chemin de restauration d'un service, le message de demande d'établissement comprenant au moins une deuxième étiquette, une deuxième interface, des informations de route relatives au chemin de restauration, un identifiant d'un chemin normal du service et une information d'indication de ressource partagée, l'information d'indication de ressource partagée servant à déterminer que le chemin de restauration partage une ressource de bande passante avec le chemin normal par le deuxième noeud, la deuxième étiquette étant une étiquette de réacheminement d'un premier noeud voisin amont au deuxième noeud, la deuxième interface étant une interface sortante du premier noeud voisin amont au deuxième noeud et le premier noeud voisin amont étant un noeud voisin amont du deuxième noeud sur le chemin de restauration ;
détermination (S102b), par le deuxième noeud, en fonction de l'identifiant du chemin normal et des informations de route relatives au chemin de restauration, si le premier noeud voisin amont est le même qu'un deuxième noeud voisin amont, et obtention d'un troisième résultat de détermination, le deuxième noeud voisin amont étant un noeud voisin amont du deuxième noeud sur le chemin normal ;
allocation (S103b), par le deuxième noeud, d'une troisième étiquette et d'une troisième interface en fonction d'une condition, la condition comprenant le troisième résultat de détermination, la troisième étiquette étant une étiquette de réacheminement du deuxième noeud au premier noeud voisin amont et la troisième interface étant une interface sortante du deuxième noeud au premier noeud voisin amont, l'étape d'allocation, par le deuxième noeud, d'une troisième étiquette et d'une troisième interface en fonction d'une condition comprenant plus particulièrement : si le troisième résultat de détermination est que le premier noeud voisin amont est le même que le deuxième noeud voisin amont, la troisième étiquette est la même qu'une étiquette de réacheminement du deuxième noeud au deuxième noeud voisin amont et la troisième interface est la même qu'une interface sortante du deuxième noeud au deuxième noeud voisin amont ;
établissement (S104b), par le deuxième noeud, d'une connexion croisée du chemin de restauration en fonction de la deuxième étiquette, de la deuxième interface, de la troisième étiquette et de la troisième interface ; et
transmission (S105b), par le deuxième noeud, d'un message de réponse d'établissement relatif au chemin de restauration au premier noeud voisin amont suite à l'étape d'allocation de la troisième étiquette et de la troisième interface, le message de réponse d'établissement comprenant au moins la troisième étiquette, la troisième interface et les informations de route relatives au chemin de restauration.

5. Procédé selon la revendication 4, lequel procédé comprend en outre :
le message de demande d'établissement comprend en outre un identifiant d'un chemin de protection du service ;
le deuxième noeud détermine en outre, en fonction de l'identifiant du chemin de protection et des informations de route relatives au chemin de restauration, si le premier noeud voisin amont est le même qu'un troisième noeud voisin amont, et obtient un quatrième résultat de détermination, le troisième noeud voisin amont étant un noeud voisin amont du deuxième noeud et sur le chemin de protection ; et
la condition comprend en outre le quatrième résultat de détermination.

6. Procédé selon la revendication 5, dans lequel l'étape d'allocation, par le deuxième noeud, d'une troisième étiquette et d'une troisième interface en fonction d'une condition comprend plus particulièrement :
si le quatrième résultat de détermination est que le premier noeud voisin amont est le même que le troisième noeud voisin amont, la troisième étiquette est la même qu'une étiquette de réacheminement du deuxième noeud au troisième noeud voisin amont et la troisième interface est la même qu'une interface sortante du deuxième noeud au troisième noeud voisin amont.

7. Procédé d'établissement d'un chemin de restauration, comprenant les étapes suivantes
réception (S101c), par un troisième noeud, d'un premier message de demande d'établissement relatif à un chemin de restauration d'un service, le premier message de demande d'établissement comprenant au moins une cinquième étiquette, une cinquième interface, des informations de route relatives au chemin de restauration, un identifiant d'un chemin normal du service et une première information d'indication de ressource partagée, la première information d'indication de ressource partagée servant à déterminer que le chemin de restauration partage une ressource de bande passante avec le chemin normal par le troisième noeud, la cinquième étiquette étant une étiquette de réacheminement d'un quatrième noeud voisin amont au troisième noeud, la cinquième interface étant une interface sortante du quatrième noeud voisin amont au troisième noeud et le quatrième noeud voisin amont étant un noeud voisin amont du troisième noeud sur le chemin de restauration ;
détermination (S102c), par le troisième noeud, en fonction de l'identifiant du chemin normal et des informations de route relatives au chemin de restauration, si un sixième noeud voisin aval est le même qu'un septième noeud voisin aval, et obtention d'un cinquième résultat de détermination, le sixième noeud voisin aval étant un noeud voisin aval du troisième noeud sur le chemin de restauration et le septième noeud voisin aval étant un noeud voisin aval du troisième noeud sur le chemin normal ;
allocation (S103c), par le troisième noeud, d'une sixième étiquette et d'une sixième interface en fonction d'une première condition, la première condition comprenant le cinquième résultat de détermination, la sixième étiquette étant une étiquette de réacheminement du troisième noeud au sixième noeud voisin aval et la sixième interface étant une interface sortante du troisième noeud au sixième noeud voisin aval, l'étape d'allocation, par le troisième noeud, d'une sixième étiquette et d'une sixième interface en fonction d'une première condition comprenant plus particulièrement : si le cinquième résultat de détermination est que le sixième noeud voisin aval est le même que le septième noeud voisin aval, la sixième étiquette est la même qu'une étiquette de réacheminement du troisième noeud au septième noeud voisin aval et la sixième interface est la même qu'une interface sortante du troisième noeud au septième noeud voisin aval ;
transmission (S104c), par le troisième noeud, d'un deuxième message de demande d'établissement relatif au chemin de restauration au sixième noeud voisin aval, le deuxième message de demande d'établissement comprenant au moins la sixième étiquette, la sixième interface, les informations de route relatives au chemin de restauration et l'identifiant du chemin normal et une deuxième information d'indication de ressource partagée, la deuxième information d'indication de ressource partagée servant à déterminer que le chemin de restauration partage une ressource de bande passante avec le chemin normal par le sixième noeud voisin aval ;
réception (S105c), par le troisième noeud, d'un premier message de réponse d'établissement relatif au chemin de restauration, le premier message de réponse d'établissement comprenant au moins une septième étiquette, une septième interface et les informations de route relatives au chemin de restauration, la septième étiquette étant une étiquette de réacheminement du sixième noeud voisin aval au troisième noeud et la septième interface étant une interface sortante du sixième noeud voisin aval au troisième noeud ;
détermination (S106c), par le troisième noeud, en fonction de l'identifiant du chemin normal et des informations de route relatives au chemin de restauration, si le quatrième noeud voisin amont est le même qu'un cinquième noeud voisin amont, et obtention d'un sixième résultat de détermination, le cinquième noeud voisin amont étant un noeud voisin amont du troisième noeud sur le chemin normal ;
allocation (S107c), par le troisième noeud, d'une huitième étiquette et d'une huitième interface en fonction d'une deuxième condition, la deuxième condition comprenant le sixième résultat de détermination, la huitième étiquette étant une étiquette de réacheminement du troisième noeud au quatrième noeud voisin amont et la huitième interface étant une interface sortante du troisième noeud au quatrième noeud voisin amont, l'étape d'allocation, par le troisième noeud, d'une huitième étiquette et d'une huitième interface en fonction d'une deuxième condition comprenant plus particulièrement : si le sixième résultat de détermination est que le quatrième noeud voisin amont est le même que le cinquième noeud voisin amont, la huitième étiquette est la même qu'une étiquette de réacheminement du troisième noeud au cinquième noeud voisin amont et la huitième interface est la même qu'une interface sortante du troisième noeud au cinquième noeud voisin amont ;
établissement (S108c), par le troisième noeud, d'une connexion croisée du chemin de restauration en fonction de la cinquième étiquette, de la cinquième interface, de la sixième étiquette, de la sixième interface, de la septième étiquette, de la septième interface, de la huitième étiquette et de la huitième interface ; et
transmission (S109c), par le troisième noeud, d'un deuxième message de réponse d'établissement relatif au chemin de restauration au quatrième noeud voisin amont suite à l'étape d'allocation de la huitième étiquette et de la huitième interface, le deuxième message de réponse d'établissement comprenant au moins la huitième étiquette, la huitième interface et les informations de route relatives au chemin de restauration.

8. Dispositif noeud, comprenant une première unité de détermination (310), une première unité d'allocation (320), une première unité de transmission (330), une première unité de réception (340) et une première unité d'établissement de croisement (350), dans lequel :
la première unité de détermination est configurée pour déterminer, en fonction d'informations de route relatives à un chemin de restauration d'un service et d'informations de route relatives à un chemin normal du service, si un premier noeud voisin aval est le même qu'un deuxième noeud voisin aval, et obtenir un premier résultat de détermination, le premier noeud voisin aval étant un noeud voisin aval du dispositif noeud sur le chemin de restauration et le deuxième noeud voisin aval étant un noeud voisin aval du dispositif noeud sur le chemin normal ;
la première unité d'allocation est configurée pour allouer une première étiquette et une première interface en fonction d'une condition, la condition comprenant le premier résultat de détermination, la première étiquette étant une étiquette de réacheminement du dispositif noeud au premier noeud voisin aval et la première interface étant une interface sortante du dispositif noeud au premier noeud voisin aval ; si le premier résultat de détermination est que le premier noeud voisin aval est le même que le deuxième noeud voisin aval, la première étiquette étant la même qu'une étiquette de réacheminement du dispositif noeud au deuxième noeud voisin aval et la première interface étant la même qu'une interface sortante du dispositif noeud au deuxième noeud voisin aval ;
la première unité de transmission est configurée pour transmettre un message de demande d'établissement au premier noeud voisin aval, le message de demande d'établissement comprenant au moins la première étiquette, la première interface, les informations de route relatives au chemin de restauration, un identifiant du chemin normal et une information d'indication de ressource partagée, l'information d'indication de ressource partagée servant à déterminer que le chemin de restauration partage une ressource de bande passante avec le chemin normal par le premier noeud voisin aval ;
l'unité de réception est configurée pour recevoir un message de réponse d'établissement relatif au chemin de restauration, le message de réponse d'établissement comprenant au moins une quatrième étiquette, une quatrième interface et les informations de route relatives au chemin de restauration, la quatrième étiquette étant une étiquette de réacheminement du premier noeud voisin aval au dispositif noeud et la quatrième interface étant une interface sortante du premier noeud voisin aval au dispositif noeud ; et
la première unité d'établissement de croisement est configurée pour établir une connexion croisée du chemin de restauration en fonction de la première étiquette, de la première interface, de la quatrième étiquette et de la quatrième interface.

9. Dispositif noeud selon la revendication 8, lequel dispositif noeud comprend en outre :
la première unité de détermination est configurée en outre pour déterminer, en fonction des informations de route relatives au chemin de restauration et d'informations de route relatives à un chemin de protection du service, si le premier noeud voisin aval est le même qu'un troisième noeud voisin aval, et obtenir un deuxième résultat de détermination, le troisième noeud voisin aval étant un noeud voisin aval du dispositif noeud sur le chemin de protection ; et dans lequel la condition comprend en outre le deuxième résultat de détermination, et le message de demande d'établissement comprend en outre un identifiant du chemin de protection.

10. Dispositif noeud, comprenant une deuxième unité de réception (410), une deuxième unité de détermination (420), une deuxième unité d'allocation (430), une deuxième unité d'établissement de croisement (440) et une deuxième unité de transmission (450), dans lequel :
la deuxième unité de réception est configurée pour recevoir un message de demande d'établissement relatif à un chemin de restauration d'un service, le message de demande d'établissement comprenant au moins une deuxième étiquette, une deuxième interface, des informations de route relatives au chemin de restauration, un identifiant d'un chemin normal du service et une information d'indication de ressource partagée, l'information d'indication de ressource partagée servant à déterminer que le chemin de restauration partage une ressource de bande passante avec le chemin normal par le dispositif noeud, la deuxième étiquette étant une étiquette de réacheminement d'un premier noeud voisin amont au dispositif noeud, la deuxième interface étant une interface sortante du premier noeud voisin amont au dispositif noeud et le premier noeud voisin amont étant un noeud voisin amont du dispositif noeud sur le chemin de restauration ;
la deuxième unité de détermination est configurée pour déterminer, en fonction de l'identifiant du chemin normal et des informations de route relatives au chemin de restauration, si le premier noeud voisin amont est le même qu'un deuxième noeud voisin amont, et obtenir un troisième résultat de détermination, le deuxième noeud voisin amont étant un noeud voisin amont du dispositif noeud sur le chemin normal ;
la deuxième unité d'allocation est configurée pour allouer une troisième étiquette et une troisième interface en fonction d'une condition, la condition comprenant le troisième résultat de détermination, la troisième étiquette étant une étiquette de réacheminement du dispositif noeud au premier noeud voisin amont et la troisième interface étant une interface sortante du dispositif noeud au premier noeud voisin amont ; si le troisième résultat de détermination est que le premier noeud voisin amont est le même que le deuxième noeud voisin amont, la troisième étiquette étant la même qu'une étiquette de réacheminement du dispositif noeud au deuxième noeud voisin amont et la troisième interface étant la même qu'une interface sortante du dispositif noeud au deuxième noeud voisin amont ;
la deuxième unité d'établissement de croisement est configurée pour établir une connexion croisée du chemin de restauration en fonction de la deuxième étiquette, de la deuxième interface, de la troisième étiquette et de la troisième interface ; et
la deuxième unité de transmission est configurée pour : après que la deuxième unité d'allocation a alloué la troisième étiquette et la troisième interface, transmettre un message de réponse d'établissement relatif au chemin de restauration au premier noeud voisin amont, le message de réponse d'établissement comprenant au moins la troisième étiquette, la troisième interface et les informations de route relatives au chemin de restauration.
